(19) Europäisches Patentamt
European Patent Office
Office européen des brevets

(11) **EP 4 481 848 A1**

(12) **EUROPEAN PATENT APPLICATION**

(43) Date of publication:
**25.12.2024 Bulletin 2024/52**

(21) Application number: **24172894.8**

(22) Date of filing: **29.04.2024**

(51) International Patent Classification (IPC):
**H01M 4/136** $^{(2010.01)}$  **H01M 4/58** $^{(2010.01)}$
**H01M 4/62** $^{(2006.01)}$  **H01M 4/02** $^{(2006.01)}$

(52) Cooperative Patent Classification (CPC):
**H01M 4/625; H01M 4/136; H01M 4/5815;
H01M 4/62; H01M 2004/028**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **19.06.2023 KR 20230078212**

(71) Applicant: **Samsung SDI Co., Ltd.
Yongin-si, Gyeonggi-do 17084 (KR)**

(72) Inventors:
• **Son, Inhyuk
17084 Gyeonggi-do (KR)**
• **Jo, Sungnim
17084 Gyeonggi-do (KR)**

• **Shim, Kyueun
17084 Gyeonggi-do (KR)**
• **Park, Taehyun
17084 Gyeonggi-do (KR)**
• **Lee, Jieun
17084 Gyeonggi-do (KR)**
• **Lim, Hyungsub
17084 Gyeonggi-do (KR)**
• **Park, Jinhwan
17084 Gyeonggi-do (KR)**
• **Park, Kyusung
17084 Gyeonggi-do (KR)**

(74) Representative: **Michalski Hüttermann & Partner
Patentanwälte mbB
Kaistraße 16A
40221 Düsseldorf (DE)**

(54) **COMPOSITE CATHODE ACTIVE MATERIAL, CATHODE INCLUDING THE SAME, AND ALL-SOLID SECONDARY BATTERY**

(57) A composite cathode active material, a cathode including the same, and an all-solid secondary battery are provided. The composite cathode active material includes a composite of $M_2S$, an alkali metal salt, and a carbon-based material, wherein M is an alkali metal, the alkali metal is Li or Na, a size of an $M_2S$ crystallite obtained from an X-ray diffraction (XRD) spectrum of the composite is less than 9.9 nm, and the composite includes a solid solution of the $M_2S$ and the alkali metal salt.

FIG. 1

EXAMPLE 1: INTERMEDIATE PRODUCT (Li$_2$S–LiI)
EXAMPLE 1 (Li$_2$S–LiI–CNF)
FIRST STAGE PULVERIZING (Li$_2$S ALONE)

Intensity (a.u.)

2θ (degree)

**EP 4 481 848 A1**

## Description

### CROSS-REFERENCE TO RELATED APPLICATION

This application claims priority to and the benefit of Korean Patent Application No. 10-2023-0078212, filed on June 19, 2023, in the Korean Intellectual Property Office, the entire content of which is incorporated herein by reference.

### BACKGROUND

#### 1. Field

According to one or more embodiments, the present disclosure relates to a composite cathode active material, a cathode including the same, and an all-solid secondary battery.

#### 2. Description of the Related Art

Recently, in accordance with industrial demand, batteries having relatively high energy density and relatively high safety have been actively developed or pursued. For example, lithium batteries are utilized in one or more suitable applications including information devices, communication devices, vehicles, and/or the like. Because vehicles are intimately intertwined and related to people's activities, e.g., on an everyday basis, safety is important.

A short circuit in lithium batteries utilizing a liquid electrolyte may increase the likelihood of risks of overheating and the possibility of fires and/or explosions. All-solid secondary batteries utilizing a solid electrolyte instead of a liquid electrolyte have been proposed because solid electrolytes have a lower possibility of ignition as compared with liquid electrolytes.

Implementation of a solid electrolyte in an all-solid secondary battery, instead of a liquid electrolyte, may thus reduce the possibility of fires or explosions. All-solid batteries may provide an improved safety profile for the devices discussed herein.

### SUMMARY

One or more aspects are directed toward a composite cathode active material that has a reduced crystallite size to provide improved specific capacity and cycle characteristics.

One or more aspects provide a cathode including the composite cathode active material.

One or more aspects provide an all-solid secondary battery including the cathode.

Additional aspects will be set forth in part in the description which follows and, in part, will be apparent from the description, or may be learned by practice of the presented embodiments of the present disclosure.

According to one or more embodiments, a composite cathode active material includes a composite of $M_2S$, an alkali metal salt, and a carbon-based material, wherein M is an alkali metal, the alkali metal is Li or Na, a size of an $M_2S$ crystallite obtained from an X-ray diffraction (XRD) spectrum of the composite is less than 9.9 nm, and the composite includes a solid solution of the $M_2S$ and the alkali metal salt.

According to one or more embodiments, a cathode includes a cathode current collector, and a cathode active material layer provided on at least one surface (e.g., one surface or two (e.g., opposite) surfaces) of the cathode current collector, wherein the cathode active material layer includes the composite cathode active material and a solid electrolyte (e.g., sulfide-based solid electrolyte).

According to one or more embodiments, an all-solid secondary battery includes the cathode, an anode, and an electrolyte layer provided between the cathode and the anode, wherein the anode includes an anode current collector and a first anode active material layer provided on one surface of the anode current collector.

According to one or more embodiments, an all-solid secondary battery includes the cathode, an anode, and an electrolyte layer provided between the cathode and the anode, wherein the cathode includes the composite cathode active material.

### BRIEF DESCRIPTION OF THE DRAWINGS

The preceding and other aspects, features, and advantages of certain embodiments of the present disclosure will be more apparent from the following description taken in conjunction with the accompanying drawings, in which:

FIG. 1 shows an X-ray diffraction (XRD) spectrum of pulverized $Li_2S$, a $Li_2S$-LiI composite as an intermediate product of Example 1, and a $Li_2S$-LiI-CNF composite prepared in Example 1;

FIG. 2A shows a scanning electron microscope image of the $Li_2S$ utilized in Example 1;

FIG. 2B shows a scanning electron microscope image of the $Li_2S$-LiI-CNF composite prepared in Example 1;

FIG. 3 is a cross-sectional view of an all-solid secondary battery according to one or more embodiments of the present disclosure;

FIG. 4 is a cross-sectional view of an all-solid secondary battery according to one or more embodiments of the present disclosure;

FIG. 5 is a cross-sectional view of an all-solid secondary battery according to one or more embodiments of the present disclosure;

FIG. 6 is a cross-sectional view of an all-solid secondary battery according to one or more embodiments of the present disclosure; and

FIG. 7 is a cross-sectional view of an all-solid secondary battery according to one or more embodiments of the present disclosure.

## DETAILED DESCRIPTION

Reference will now be made in more detail to embodiments, examples of which are illustrated in the accompanying drawings, wherein like reference numerals refer to like elements throughout, and duplicative descriptions thereof may not be provided. In this regard, the present embodiments may have different forms and should not be construed as being limited to the descriptions set forth herein. Accordingly, the embodiments are merely described, by referring to the drawings, to explain aspects of the present description. As utilized herein, the term "and/or" includes any and all combinations of one or more of the associated listed items. Expressions such as "at least one of," if (e.g., when) preceding a list of elements, modify the entire list of elements and do not modify the individual elements of the list.

The terminology utilized hereinbelow is utilized for the purpose of describing particular embodiments only and is not intended to limit the present disclosure. As utilized herein, the singular forms are intended to include the plural forms as well, unless the context clearly indicates otherwise. Unless otherwise defined, all terms (including chemical, technical and scientific terms) utilized in the present disclosure have the same meaning as commonly understood by one of ordinary skill in the art to which the present disclosure belongs. In some embodiments, it will be further understood that terms, such as those defined in commonly utilized dictionaries, should be interpreted as having a meaning that is consistent with their meaning in the context of the relevant art and the present disclosure, and will not be interpreted in an idealized or overly formal sense unless expressly so defined herein.

Embodiments are described in the present disclosure with reference to cross-sectional views which are schematic diagrams of idealized embodiments. As such, variations from the shapes of the illustrations as a result, for example, of manufacturing techniques and/or tolerances, are to be expected. In some embodiments, the embodiments described in the present disclosure should not be construed as limited to the particular shapes regions of illustrated in the present disclosure but may include deviations in shapes that result, for example, from manufacturing. For example, regions illustrated or described as being flat may be typically rough and/or have nonlinear features. Moreover, sharp-drawn angles may be round. In some embodiments, regions illustrated in the drawings are schematic in nature and their shapes are not intended to illustrate the actual shape of a region and are not intended to limit the scope of the claims.

Throughout the specification, if (e.g., when) a component, such as a layer, a film, a region, or a plate, is described as being "above" or "on" another component, the component may be directly above another component, or there may be yet another component therebetween. It will be understood that although the terms "first," "second," and/or the like may be utilized herein to describe one or more suitable elements, these elements should not be limited by these terms. These terms are only utilized to distinguish one element from another element. The described terms are utilized only to distinguish one component from another. Components having substantially the same functional configuration in the present specification and drawings are denoted by the same reference numerals, and redundant descriptions thereof will not be provided.

The present disclosure may, however, be embodied in different forms and should not be construed as limited to the embodiments described in the present disclosure. These embodiments are provided so that the present disclosure will be thorough and complete, and will fully convey the scope of the present disclosure to those skilled in the art. Like reference numerals designate like elements, and duplicative descriptions thereof may not be provided.

As used herein, expressions such as "at least one of," "one of," and "selected from," if (e.g., when) preceding a list of elements, modify the entire list of elements and do not modify the individual elements of the list. For example, the expressions "at least one of a to c," "at least one of a, b or c," and "at least one of a, b and/or c" may indicate only a, only b, only c, both (e.g., simultaneously) a and b, both (e.g., simultaneously) a and c, both (e.g., simultaneously) b and c, all of a, b, and c, or variations thereof.

The term "may" will be understood to refer to "one or more embodiments of the present disclosure," some of which include the described element and some of which exclude that element and/or include an alternate element. Similarly, alternative language such as "or" refers to "one or more embodiments of the present disclosure," each including a corresponding listed item.

If (e.g., when) it is described that an element is "on" another element, it will be understood that the element may be provided directly on another element or still another element may be interposed therebetween. On the other hand, if (e.g., when) it is described that an element is "directly on" another element, still another element is not interposed therebetween.

It will be understood that, although the terms "first," "second," and "third" may be utilized herein to describe one or more suitable elements, components, regions, layers, and/or sections, these elements, components, regions, layers, and/or sections should not be limited by these terms. These terms are only utilized to distinguish one element, component, region, layer, or section from another region, layer, or section. In some embodiments, a first element, component, region, layer, or section described may be termed a second element, component, region, layer, or section without departing from the teachings of the present specification.

The term utilized herein is intended to describe only a specific embodiment and is not intended to limit the present disclosure. As utilized herein, the singular forms "a," "an," and "the" are intended to include the plural forms, including "at least one," unless the content (e.g., amount) clearly indicates otherwise. "At least one" should not be construed as being limited to the singular. As utilized herein, the term "and/or" includes any and all combinations of one or more of the associated listed items. The terms "includes," "including," "include," "having," "has," "have," "comprise," "comprises," and/or "comprising," if (e.g., when) utilized in the detailed description, specify a presence of stated features, regions, integers, steps, operations, elements, and/or components, but do not preclude the presence or addition of one or more other features, regions, integers, steps, operations, elements, components, and/or groups thereof.

Spatially relative terms such as "beneath," "below," "lower," "above," and "upper" may be utilized herein to easily describe one element or feature's relationship to another element or feature. It will be understood that the spatially relative terms are intended to encompass different orientations of a device in utilize or operation in addition to the orientation illustrated in the drawings. For example, if (e.g., when) a device in the drawings is turned over, elements described as "below" or "beneath" other elements or features would then be "above" or "over" the other elements or features. In some embodiments, the example term "below" may encompass both (e.g., simultaneously) orientations of above and below. The device may be otherwise oriented (rotated 90 degrees or at other orientations), and the spatially relative terms utilized herein may be interpreted accordingly.

In this context, "consisting essentially of" means that any additional components will not materially affect the chemical, physical, optical or electrical properties of the semiconductor film.

Further, in this specification, the phrase "on a plane," or "plan view," means viewing a target portion from the top, and the phrase "on a cross-section" means viewing a cross-section formed by vertically cutting a target portion from the side.

### Definitions

"Group" refers to a group of the periodic table of elements according to the International Union of Pure and Applied Chemistry ("IUPAC") Groups 1-18 group classification system.

In the present disclosure, the term "particle diameter" refers to an average diameter if (e.g., when) particles are spherical and refers to an average major axis length if (e.g., when) particles are non-spherical. A particle diameter may be measured by utilizing a particle size analyzer (PSA). A "particle diameter" is, for example, an average particle diameter. An "average particle diameter" refers to, for example, a median particle diameter (D50).

D50 refers to a particle size corresponding to a 50 % cumulative volume if (e.g., when) a particle size distribution measured through a laser diffraction method is calculated from particles having a smaller particle size.

D90 refers to a particle size corresponding to a 90 % cumulative volume if (e.g., when) a particle size distribution measured through a laser diffraction method is calculated from particles having a smaller particle size.

D10 refers to a particle size corresponding to a 10 % cumulative volume if (e.g., when) a particle size distribution measured through a laser diffraction method is calculated from particles having a smaller particle size.

The term "metal" as utilized herein includes all of metals and metalloids such as silicon and germanium in an elemental or ionic state.

The term "alloy" as utilized herein refers to a mixture of two or more metals.

The term "electrode active material" as utilized herein refers to an electrode material that may undergo lithiation and delithiation.

The term "cathode active material" as utilized herein refers to a cathode material that may undergo lithiation and delithiation.

The term "anode active material" as utilized herein refers to an anode material that may undergo lithiation and delithiation.

The terms "lithiate" and "lithiating" as utilized herein refer to a process of adding lithium to an electrode active material.

The terms "delithiate" and "delithiating" as utilized herein refer to a process of removing lithium from an electrode active material.

The terms "charge" and "charging" as utilized herein refer to a process of providing electrochemical energy to a battery.

The terms "discharge" and "discharging" as utilized herein refer to a process of removing electrochemical energy from a battery.

The terms "positive electrode" and "cathode" as utilized herein refer to an electrode at which electrochemical reduction and lithiation occur during a discharging process.

The terms "negative electrode" and "anode" as utilized herein refer to an electrode at which electrochemical oxidation and delithiation occur during a discharging process.

In present disclosure, "not include a or any 'component'" "exclude a or any 'component'", "'component'-free", and/or the like refers to that the "component" not being added, selected or utilized as a component in the composition, but the "component" of less than a suitable amount may still be included due to other impurities and/or external factors.

While specific embodiments have been described, alternatives, modifications, variations, improvements, and substantial equivalents that are or may be presently unforeseen may arise to applicants or others skilled in the art. In some embodiments, the appended claims as filed and as they may be amended are intended to embrace all such alternatives, modifications, variations, improvements, and substantial equivalents.

Hereinafter, a composite cathode active material, a cathode including the same, and an all-solid secondary battery according to embodiments will be described in more detail.

## Composite cathode active material

A composite cathode active material according to embodiments may include a composite of $M_2S$, an alkali metal salt, and a carbon-based material. M may be an alkali metal. The alkali metal may be Li or Na. The $M_2S$ may be, for example, $Li_2S$ or $Na_2S$. A size of an $M_2S$ crystallite obtained from an X-ray diffraction (XRD) spectrum of the composite may be less than 9.9 nanometer (nm). The size of the $M_2S$ crystallite obtained from the XRD spectrum of the composite may be, for example, 9.85 nm or less, 9.83 nm or less, 9.8 nm or less, 9.5 nm or less, 9.0 nm or less, or 8.5 nm or less. The composite may include a solid solution of the $M_2S$ and the alkali metal salt. The size of the $M_2S$ crystallite obtained from the XRD spectrum of the composite may be, for example, in a range of about 1 nm to at most (e.g., less than) 9.9 nm, about 1 nm to about 9.8 nm, about 2 to about 9.8 nm, about 2 nm to about 9.5 nm, about 2 nm to about 9.0 nm, about 2 nm to about 8.5 nm, or about 3 nm to about 8.5 nm. The composite may include the solid solution of the $M_2S$ and the alkali metal salt.

The $M_2S$ may form the composite together with the alkali metal salt and the carbon-based material, and thus the ionic conductivity and electronic conductivity of the $M_2S$ may be improved concurrently (e.g., simultaneously). The composite may include the alkali metal salt so that the ionic conductivity of the composite cathode active material may be improved and the internal resistance of a cathode and lithium battery including the composite cathode active material may be reduced. The composite may include the carbon-based material so that the electronic conductivity of the composite cathode active material may be improved and the internal resistance of a cathode and lithium battery including the composite cathode active material may be reduced.

The composite may include the $M_2S$ crystallite, and the size of the $M_2S$ crystallite may be decreased to 20 nm or less so that a change in volume of the $M_2S$ crystallite during charging/discharging may be reduced. For example, as the size of the $M_2S$ crystallite decreases, a change in volume caused by one $M_2S$ crystallite may decrease so that an overall change in volume of the composite during charging/discharging may be reduced. For example, as the size of the $M_2S$ crystallite decreases, a grain boundary between a plurality of $M_2S$ crystallites may be more easily accommodate a change in volume of the $M_2S$ crystallite during charging/discharging so that a change in volume of the composite during charging/discharging may be reduced. The possibility of defects such as cracks due to a change in volume of the composite during charging/discharging may be reduced. The composite cathode active material may include the composite, and thus the cycle characteristics of a secondary battery including the composite cathode active material may be improved. For example, the lifespan characteristics of a lithium battery including the composite cathode active material may be improved.

The composite may include the $M_2S$ crystallite, and the size of the $M_2S$ crystallite may be decreased to 21 nm or less so that a contact area between the $M_2S$ crystallite and the alkali metal salt and/or carbon-based material may be further increased. The contact area between the $M_2S$ crystallite and the alkali metal salt and/or carbon-based material may be increased, and thus the ionic conductivity and/or electronic conductivity of the composite may be further improved. The composite cathode active material may include the composite, and thus the reversibility of an electrode reaction may be improved in a secondary battery including the composite cathode active material. In some embodiments, the specific capacity of the composite cathode active material may be increased.

The composite may include the solid solution of the $M_2S$ and the alkali metal salt, and thus the ionic conductivity of the composite may be increased. For example, the solid solution of the $M_2S$ and the alkali metal salt may include alkali metal ions provided in the $M_2S$ crystallite, and thus the ionic conductivity of the solid solution of the $M_2S$ and the alkali metal salt may be improved as compared with the ionic conductivity of the $M_2S$. In some embodiments, the ionic conductivity of the composite may be improved, and the internal resistance of the composite may be reduced. The composite cathode active material may include the composite, and thus the cycle characteristics of a secondary battery including the composite cathode active material may be improved. For example, the high-rate characteristics of a secondary battery including the composite cathode active material may be improved.

In some embodiments, a composite of $Li_2S$, the alkali metal salt, and the carbon-based material may be distinguished from a simple mixture of $Li_2S$, an alkali metal salt, and a carbon-based material. For example, the simple mixture of $Li_2S$, the alkali metal salt, and the carbon-based material may provide high interfacial resistance because a dense interface between $Li_2S$, the alkali metal salt, and the carbon-based material may not be maintained, and thus the lifespan characteristics of a secondary battery may deteriorate.

The composite may include the $M_2S$. The $M_2S$ may have a high theoretical capacity, and thus a secondary battery having a high energy density may be provided. However, in order to overcome the shortcomings such as the low ionic conductivity and/or electronic conductivity of the $M_2S$, a composite between the $M_2S$, and the alkali metal salt and the carbon-based material may be formed. The content (e.g., amount) of the $M_2S$ in the composite may be, for example, in a range of about 10 wt% to about 80 wt%, about 20 wt% to about 70 wt%, about 30 wt% to about 60 wt%, or about 40 wt% to about 60 wt% of the total weight of the composite. If (e.g., when) the content (e.g., amount) of the $M_2S$ excessively increases, (e.g., is excessively high) it may not be easy to improve the ionic conductivity and/or electronic conductivity of the $M_2S$. If (e.g., when) the content (e.g., amount) of the $M_2S$ is excessively low, the energy density of a secondary battery may decrease.

The composite may include the alkali metal salt. The alkali metal salt may be, for example, a compound that does not include sulfur (S). The alkali metal salt may be, for example, a binary compound or a ternary compound. The alkali metal salt may be, for example, a binary compound including an alkali metal and one type or kind of element selected from Groups 13 to 17 of the periodic table of elements. The alkali metal salt may be, for example, a ternary compound including an alkali metal and two types (kinds) of elements selected from Groups 13 to 17 of the periodic table of elements.

The alkali metal salt may be, for example, a lithium salt. A lithium salt binary compound may include, for example, LiI, LiBr, LiCl, LiF, LiH, $Li_2O$, $Li_2Se$, $Li_2Te$, $Li_3N$, $Li_3P$, $Li_3As$, $Li_3Sb$, $Li_3Al_2$, $LiB_5$, or a combination thereof. A lithium salt ternary compound may include, for example, $Li_3OCl$, $LiPF_6$, $LiBF_4$, $LiSbF_6$, $LiAsF_6$, $LiClO_4$, $LiAlO_2$, $LiAlCl_4$, $LiNO_3$, $Li_2CO_3$, $LiBH_4$, $Li_2SO_4$, $Li_3BO_3$, $Li_3PO_4$, $Li_4NCl$, $Li_5NCl_2$, $Li_3BN_2$, or a combination thereof. The composite may include such a lithium salt, and thus the ionic conductivity of the composite may be further improved. This lithium salt may more easily form a solid solution together with, for example, $Li_2S$ in the composite.

The alkali metal salt may be, for example, a sodium salt. A sodium salt binary compound may include, for example, NaI, NaBr, NaCl, NaF, $Na_2O$, $Na_2Se$, $Na_3N$, $Na_3P$, $Na_3As$, $Na_3Sb$, $Na_3Al_2$, $NaB_5$, or a combination thereof. A sodium salt ternary compound may include, for example, $Na_3OCl$, $NaBF_4$, $NaPF_6$, $NaAsF_6$, $NaClO_4$, $NaNO_5$, $NaAlO_2$, $NaAlCl_4$, $NaNO_3$, $Na_2CO_3$, $NaBH_4$, $Na_2SO_4$, $Na_3BO_3$, $Na_3PO_4$, $Na_4NCl$, $Na_5NCl_2$, $Na_3BN_2$, or a combination thereof. The composite may include such a sodium salt, and thus the ionic conductivity of the composite may be further improved. The sodium salt may more easily form a solid solution together with, for example, $La_2S$ in the composite.

The content (e.g., amount) of the alkali metal salt in the composite may be in a range of about 1 wt% to about 40 wt%, about 5 to about 35 wt%, about 10 wt% to about 35 wt%, about 15 wt% to about 35 wt%, about 20 wt% to about 35 wt%, or about 25 wt% to about 35 wt% of the total weight of the composite. If (e.g., when) the content (e.g., amount) of the alkali metal salt excessively increases (e.g., is excessively high), the energy density of a secondary battery may decrease. If (e.g., when) the content (e.g., amount) of the alkali metal salt is excessively low, the ionic conductivity of the composite may decrease, and thus the internal resistance of the composite cathode active material may increase. In some embodiments, the cycle characteristics of a secondary battery may deteriorate.

A molar ratio of the $M_2S$ to the alkali metal salt in the composite may be, for example, in a range of about 50:50 to about 95:5, about 60:40 to about 95:5, about 60:40 to about 90:10, about 65:35 to about 90:10, about 65:35 to about 85:15, or about 70:30 to about 85:15. The molar ratio of the $M_2S$ to the alkali metal salt in the composite may be, for example, in a range of about 50:50 to about 95:5, about 50:50 to about 90:10, about 50:50 to about 85:15, about 50:50 to about 80:20, about 50:50 to 75:25, or about 50:50 to about 70:30. The $M_2S$ and the alkali metal salt may have a molar ratio in such ranges, and thus the cycle characteristics of a secondary battery including the composite cathode active material may be further improved. If (e.g., when) a mole fraction of the $M_2S$ is excessively high, an effect of improving ionic conductivity by the alkali metal salt may be insignificant. If (e.g., when) the mole fraction of the $M_2S$ is excessively high, the energy density of a secondary battery including the composite cathode active material may decrease.

A molar ratio of $Li_2S$ to the lithium salt in the composite may be, for example, in a range of about 50:50 to about 95:5, about 60:40 to about 95:5, about 60:40 to about 90:10, about 65:35 to about 90:10, about 65:35 to about 85:15, or about 70:30 to about 85:15. The molar ratio of $Li_2S$ to the lithium salt in the composite may be, for example, in a range of about 50:50 to about 95:5, about 50:50 to about 90:10, about 50:50 to about 85:15, about 50:50 to about 80:20, about 50:50 to 75:25, or about 50:50 to about 70:30. $L_2S$ and the lithium salt may have a molar ratio in such ranges, and thus the cycle characteristics of a lithium battery including the composite cathode active material may be further improved. If (e.g., when) a mole fraction of Li$_2$S is excessively high, an effect of improving ionic conductivity by the lithium salt may be insignificant. If (e.g., when) the mole fraction of Li$_2$S is excessively low, the energy density of a lithium battery including a composite cathode active material may decrease.

A molar ratio of Na$_2$S to the sodium salt in the composite may be, for example, in a range of about 50:50 to about 95:5, about 60:40 to about 95:5, about 60:40 to about 90:10, about 65:35 to about 90:10, about 65:35 to about 85:15, or about 70:30 to about 85:15. The molar ratio of Na$_2$S to the sodium salt in the composite may be, for example, in a range of about 50:50 to about 95:5, about 50:50 to about 90:10, about 50:50 to about 85:15, about 50:50 to about 80:20, about 50:50 to 75:25, or about 50:50 to about 70:30. Na$_2$S to the sodium salt may have a molar ratio in such ranges, and thus the cycle characteristics of a sodium battery including the composite cathode active material may be further improved. If (e.g., when) a mole fraction of Na$_2$S is excessively high, an effect of improving ionic conductivity by the lithium salt may be insignificant. If (e.g., when) the mole fraction of Na$_2$S is excessively low, the energy density of a sodium battery including a composite cathode active material may decrease.

The composite may include the carbon-based material. As the carbon-based material, for example, any material, which is a material including carbon atoms and is utilized as a conductive material in the art, may be utilized. The carbon-based material may be, for example, crystalline carbon, amorphous carbon, or a combination thereof. The carbon-based material may be, for example, a sintered material of a carbon precursor. The carbon-based material may include, for example, carbon nanostructures. The carbon nanostructures may include, for example, one-dimensional carbon nanostructures, two-dimensional carbon nanostructures, three-dimensional carbon nanostructures, or a combination thereof. The carbon nanostructures may include, for example, carbon nanotubes (CNTs), carbon nanofibers (CNFs), carbon nanobelts, carbon nanorods, graphene, or a combination thereof. The carbon-based material may be, for example, a porous carbon-based material or a non-porous carbon-based material. The porous carbon-based material may include, for example, periodic and regular two-dimensional or three-dimensional pores. The porous carbon-based material may include, for example, carbon black (CB) such as Ketjen black (KB), acetylene black (AB), Denka black, thermal black, or channel black; graphite; activated carbon; or a combination thereof. The form of the carbon-based material may be, for example, a particle form, a sheet form, a flake form, and/or the like, but one or more embodiments are not limited thereto. Any material utilized as carbon-based material in the art may be utilized.

The content (e.g., amount) of the carbon-based material included in the composite may be, for example, in a range of about 1 wt% to about 20 wt%, about 5 wt% to about 20 wt%, or about 10 wt% to about 20 wt% of the total weight of the composite. If (e.g., when) the content (e.g., amount) of the carbon-based material excessively increases, the energy density of a secondary battery may decrease. If (e.g., when) the content (e.g., amount) of the carbon-based material excessively decreases, the electronic conductivity of the composite may decrease, and thus the internal resistance of the composite cathode active material may increase. In some embodiments, the cycle characteristics of a secondary battery may deteriorate.

In an XRD spectrum of the composite, for example, a first lattice constant d1 derived from a first peak appearing at a diffraction angle 2θ of about 27°±2.0° corresponding to a (111) crystal plane of the M$_2$S may be larger than a second lattice constant d2 derived from a second peak appearing at a diffraction angle 2θ of about 27°±2.0° corresponding to the (111) crystal plane of the M$_2$S in an XRD spectrum of the M$_2$S utilized to prepare the composite. An M$_2$S-alkali metal salt-carbon-based material composite may have a larger lattice constant d than the M$_2$S utilized to prepare the composite, and thus alkali metal ions may be more easily transferred in an M$_2$S crystal structure of the composite. Accordingly, the ionic conductivity of the composite cathode active material including the composite may be further improved. The internal resistance of a secondary battery including the composite cathode active material may be reduced, and the cycle characteristics thereof may be improved. A difference between the first lattice constant d1 and the second lattice constant d2 may be 0.05 angstrom (Å) or more, 0.1 Å or more, 0.15 Å or more, 0.2 Å or more, or 0.25 Å or more. A size of the first lattice constant d1 may be, for example, 5.78 Å or more, 5.80 Å or more, 5.82 Å or more, 5.85 Å or more, 5.90 Å or more, 5.95 Å or more, or 6.0 Å or more. The first lattice constant d1 of the composite may have such a size, and thus the ionic conductivity of the composite cathode active material including the composite may be further improved. The internal resistance of a secondary battery including the composite cathode active material may be reduced, and the cycle characteristics thereof may be improved.

In the XRD spectrum of the composite, for example, the first peak appearing at the diffraction angle 2θ of about 27°±2.0° corresponding to the (111) crystal plane of the M$_2$S may have a first diffraction angle, and the second peak appearing at the diffraction angle 2θ of about 27°±2.0° corresponding to the (111) crystal plane of the M$_2$S in the XRD spectrum of the M$_2$S utilized to prepare the composite may have a second diffraction angle. The first diffraction angle may be less than the second diffraction angle. For example, a position of the first peak may shift to a lower angle than a position of the second peak. In some embodiments, the M$_2$S-alkali metal salt-carbon-based material composite may have a reduced crystallite size as compared with the M$_2$S utilized to prepare the composite. The M$_2$S-alkali metal salt-carbon-based material composite may have a reduced crystallite size, and thus a change in volume of a crystallite during charging or discharging may be reduced, thereby reducing a change in volume of the composite including a plurality of crystallites during charging/discharging. Defects such as cracks in the composite cathode active material including the composite may be suppressed or reduced from occurring during charging/discharging. In some embodiments, the cycle characteristics of a secondary battery including the composite cathode active material may be improved.

In the XRD spectrum of the composite, for example, the first peak appearing at the diffraction angle $2\theta$ of about $27°\pm2.0°$ corresponding to the (111) crystal plane of the $M_2S$ may have a first full width at half maximum (FWMH) (FWHM1), and the second peak appearing at the diffraction angle $2\theta$ of about $27\pm2.0°$ corresponding to the (111) crystal plane of the $M_2S$ in the XRD spectrum of the $M_2S$ utilized to prepare the composite may have a second FWHM (FWHM2). The first FWMH may be greater than the second FWMH. In some embodiments, the $M_2S$-alkali metal salt-carbon-based material composite may have an increased lattice strain as compared with the $M_2S$ utilized to prepare the composite. For example, the $M_2S$ and the alkali metal salt may form a solid solution, and thus the $M_2S$-alkali metal salt-carbon-based material composite may have an increased lattice strain. The $M_2S$-alkali metal salt-carbon-based material composite may have an increased FWHM as compared with the $M_2S$ utilized to prepare the composite, and thus the ionic conductivity of the composite cathode active material including the composite may be further improved. The internal resistance of a secondary battery including the composite cathode active material may be reduced, and the cycle characteristics thereof may be improved.

The first FWHM may be, for example, 1° or more, 1.05° or more, 1.10° or more, or 1.15° or more. The composite may have the first FWHM (FWHM1) in such ranges, and thus the ionic conductivity of the composite cathode active material including the composite may be further improved. The internal resistance of a secondary battery including the composite cathode active material may be reduced, and the cycle characteristics thereof may be improved.

A Mohs hardness of each of the alkali metal salt and the carbon-based material may be greater than that of the $M_2S$. The Mohs hardness of the $M_2S$ may be, for example, 0.6 or less. The Mohs hardness of $Li_2S$ may be, for example, about 0.6.

The Mohs hardness of the alkali metal salt may be 0.7 or more, 0.8 or more, 0.9 or more, 1.0 or more, 1.5 or more, or 2.0 or more. The alkali metal salt may have a Mohs hardness in such ranges, the $M_2S$ may be more easily pulverized during a milling process, and the solid solution of the $M_2S$ and the alkali metal salt may be more easily formed. A Mohs hardness of LiI may be, for example, about 2.0. A Mohs hardness of NaI may be, for example, about 2.1.

The Mohs hardness of the carbon-based material may be 0.7 or more, 0.8 or more, 0.9 or more, 1.0 or more, 1.2 or more, or 1.5 or more. The carbon-based material may have a Mohs hardness in such ranges, the $M_2S$ may be more easily pulverized during a milling process, and the $M_2S$-alkali metal salt-carbon-based material composite may be more easily formed. A Mohs hardness of CNFs may be, for example, about 1.5.

The composite cathode active material may be in a form of particles. In some embodiments, a particle size of the composite cathode active material, for example, a size of composite particles, may be, for example, 10 micrometer ($\mu$m) or less, 5 $\mu$m or less, 2 $\mu$m or less, 1.5 $\mu$m or less, or 1 $\mu$m or less. The size of the composite particles may be, for example, in a range of about 0.1 $\mu$m to about 10 $\mu$m, about 0.1 $\mu$m to about 5 $\mu$m, about 0.1 $\mu$m to about 2 $\mu$m, about 0.1 $\mu$m to about 1.5 $\mu$m, or about 0.1 $\mu$m to about 1 $\mu$m or less. The composite particles may have a size in such ranges, and thus a change in volume during charging/discharging may be suppressed or reduced, thereby suppressing the deterioration of the composite cathode active material including the composite during charging/discharging. If (e.g., when) the size of the composite particles excessively increases, a change in volume of the composite during charging/discharging may increase, which may accelerate the deterioration of the composite cathode active material including the composite. In some embodiments, the cycle characteristics of a secondary battery including the composite cathode active material may deteriorate.

A size of $M_2S$ particles included in the composite cathode active material, for example, may be 2 $\mu$m or less, 1.5 $\mu$m or less, or 1 $\mu$m or less. The size of the $M_2S$ particles may be, for example, in a range of about 0.1 $\mu$m to about 2 $\mu$m, about 0.1 $\mu$m to about 1.5 $\mu$m, or about 0.1 $\mu$m to about 1 $\mu$m. The $M_2S$ particles may have a size in such ranges, and thus a change in volume during charging/discharging may be suppressed or reduced, thereby suppressing the deterioration of the composite cathode active material including the composite during charging/discharging. If (e.g., when) the size of the $M_2S$ particles excessively increases, a change in volume of the composite during charging/discharging may increase, which may accelerate the deterioration of the composite cathode active material including the composite. In some embodiments, the cycle characteristics of a secondary battery including the composite cathode active material may deteriorate.

In some embodiments, the cycle characteristics of a secondary battery including the composite cathode active material, for example, the lifespan characteristics thereof, may be improved. The size of the composite particles, for example, a particle diameter of the composite, may be measured by utilizing, for example, a laser diffraction beam, a scanning electron microscope (SEM), and/or the like. The particle diameter of the composite may be an arithmetic average of particle diameters of a plurality of particles measured, for example, in a SEM image by utilizing software.

The composite may include the carbon-based material, and the carbon-based material may include, for example, a fibrous carbon-based material. The composite may include the fibrous carbon-based material, and the electronic conductivity of the composite may be further improved. The composite may include the fibrous carbon-based material, and thus electronic conduction may be more easily performed from the surface to the inside of the composite. The internal resistance of the composite cathode active material including the composite may be reduced, and the cycle characteristics of a secondary battery including the composite cathode active material may be further improved.

An aspect ratio of the fibrous carbon-based material may be, for example, 2 or more, 3 or more, 4 or more, 5 or more, 10 or more, or 20 or more. The aspect ratio of the fibrous carbon-based material may be, for example, in a range of about 2 to about 30, about 3 to about 30, about 4 to about 30, about 5 to about 30, about 10 to about 30, or about 20 to about 30. The aspect ratio of the fibrous carbon-based material may be, for example, in a range of about 2 to about 30, about 2 to about 20, about 2 to about 10, about 2 to about 8, about 2 to about 5, or about 2 to about 4. The fibrous carbon-based material may have an aspect ratio in such ranges so that the overall electronic conductivity of the composite may be improved, and an imbalance of local electronic conductivity in the composite may be further alleviated. The aspect ratio of the fibrous carbon-based material, e.g., a ratio of diameter and length of the fibrous carbon-based material may be determined from SEM images.

The fibrous carbon-based material may include, for example, carbon nanostructures. The carbon nanostructures may include, for example, carbon nanofibers (CNFs), carbon nanotubes (CNTs), carbon nanobelts, carbon nanorods, or a combination thereof.

The carbon nanostructure may form a primary carbon nanostructure consisting of one carbon nanostructure and a secondary carbon nanostructure in which a plurality of carbon nanostructures aggregate.

A diameter of the primary carbon nanostructure may be, for example, in a range of about 1 nm to about 200 nm, about 1 nm to about 150 nm, about 1 nm to about 100 nm, about 1 nm to about 50 nm, about 1 nm to about 30 nm, or about 1 nm to about 20 nm. A length of the primary carbon nanostructure may be, for example, in a range of 10 nm to about 2 $\mu$m, about 10 nm to about 1.5 $\mu$m, about 10 nm to about 1 $\mu$m, about 10 nm to about 500 nm, about 10 nm to about 400 nm, about 10 nm to about 300 nm, about 10 nm to about 200 nm, or about 10 nm to about 100 nm. The diameter and length of the primary carbon nanostructure may be measured from a SEM or transmission electron microscope (TEM) image. In other embodiments, the diameter and/or length of the primary carbon nanostructure may be measured through laser diffraction.

The secondary carbon nanostructure may be, for example, a structure formed by primary carbon nanostructures being entirely or partially clustered to constitute a bundle-type or kind or rope-type or kind nanostructure. The secondary carbon nanostructure may include, for example, a bundle-type or kind carbon nanostructure, a rope-type or kind carbon nanostructure, or a combination thereof. A diameter of the secondary carbon nanostructure may be, for example, in a range of about 2 nm to about 200 nm, about 3 nm to about 150 nm, about 5 nm to about 100 nm, about 5 nm to about 50 nm, about 5 nm to about 30 nm, or about 5 nm to about 20 nm. A length of the secondary carbon nanotube structure may be, for example, in a range of about 20 nm to about 2 $\mu$m, about 30 nm to about 1.5 $\mu$m, about 50 nm to about 1 $\mu$m, about 50 nm to about 500 nm, about 50 nm to about 400 nm, about 50 nm to about 300 nm, about 50 nm to about 200 nm, or about 50 nm to 100 nm. The diameter and length of the secondary carbon nanostructure may be measured from a SEM image or an optical microscope. In other embodiments, the diameter and/or length of the secondary carbon nanostructure may be measured through laser diffraction. The secondary carbon nanostructure may be dispersed, for example, in a solvent and/or the like to be converted into the primary carbon nanostructure and then may be utilized to prepare a composite.

For example, with respect to about 100 parts by weight of the composite, the composite may include the $M_2S$ in a range of about 10 parts by weight to about 80 parts by weight, the alkali metal salt in a range of about 1 part by weight to about 40 parts by weight, and the carbon-based material in a range of about 1 part by weight to about 20 parts by weight. The content (e.g., amount) of the $M_2S$ included in the composite may be, for example, in a range of about 10 parts by weight to about 80 parts by weight, about 20 parts by weight to about 70 parts by weight, about 30 parts by weight to about 60 parts by weight, or about 40 parts by weight to about 60 parts by weight with respect to about 100 parts by weight of the composite. The content (e.g., amount) of the alkali metal salt included in the composite may be, for example, in a range of about 10 parts by weight to about 40 parts by weight, about 15 parts by weight to about 40 parts by weight, about 20 parts by weight to about 40 parts by weight, or about 25 parts by weight to about 35 parts by weight with respect to about 100 parts by weight of the composite. The content (e.g., amount) of the carbon-based material included in the composite may be, for example, in a range of about 1 part by weight to about 20 parts by weight, about 5 parts by weight to about 20 parts by weight, or about 5 parts by weight to about 15 parts by weight with respect to about 100 parts by weight of the composite. The composite may include the $M_2S$, the alkali metal salt, and the carbon-based material in such ranges, and thus the composite cathode active material including the composite may provide excellent or suitable ionic conductivity and/or electronic conductivity.

The ionic conductivity of the composite may be, for example, $1 \times 10^{-5}$ Siemens per centimeter (S/cm) or more, $2 \times 10^{-5}$ S/cm or more, $4 \times 10^{-5}$ S/cm or more, $6 \times 10^{-5}$ S/cm or more, $8 \times 10^{-5}$ S/cm or more, or $1 \times 10^{-4}$ S/cm or more at a temperature of about 25 °C. Ionic conductivity may be measured by utilizing, for example, electrochemical impedance spectroscopy, a direct current (DC) polarization method, and/or the like. The composite may have ionic conductivity in such ranges, and thus the internal resistance of the composite cathode active material including the composite may be reduced. The cycle characteristics of a secondary battery including the composite cathode active material may be improved. The electronic conductivity of the composite may be, for example, $1 \times 10^{-5}$ S/cm or more, $2 \times 10^{-5}$ S/cm or more, $4 \times 10^{-5}$ S/cm or more, $6 \times 10^{-5}$ S/cm or more, $8 \times 10^{-5}$ S/cm or more, or $1 \times 10^{-4}$ S/cm or more at a temperature of about 25 °C. Electronic conductivity may be measured by utilizing, for example, electrochemical impedance spectroscopy, a DC polarization method, and/or the like. The composite may have electronic conductivity in such ranges, and thus the internal resistance of the composite cathode active material including the composite may be reduced. The cycle characteristics of a secondary battery including the composite cathode active material may be improved.

**Cathode**

**Cathode: Cathode active material**

A cathode according to embodiments may include a cathode current collector and a cathode active material layer provided on at least one surface (e.g., on one or two (opposite) surfaces) of the cathode current collector. The cathode active material layer may include the described composite cathode active material and a solid electrolyte. The cathode may include the composite cathode active material and the solid electrolyte and thus may have further reduced internal resistance. In some embodiments, the cycle characteristics of a secondary battery including the cathode may be further improved.

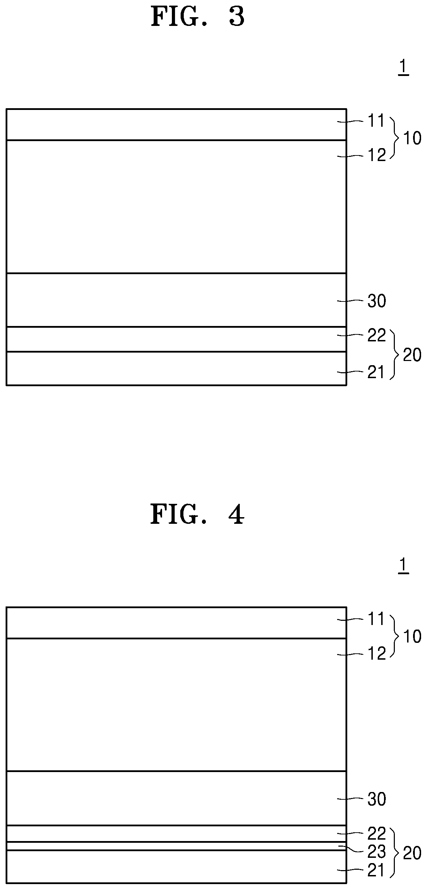

Referring to FIGS. 3 to 7, a cathode 10 may include a cathode current collector 11, and a cathode active material layer 12 provided on at least one surface (e.g., on one or two (e.g., opposite) surfaces) of the cathode current collector 11. The cathode active material layer 12 may include the described composite cathode active material and a solid electrolyte.

The composite cathode active material may be included in a range of about 40 parts by weight to about 90 parts by weight, about 40 parts by weight to about 80 parts by weight, about 50 parts by weight to about 80 parts by weight, or about 50 parts by weight to about 70 parts by weight with respect to about 100 parts by weight of the cathode active material layer 12. If (e.g., when) the content (e.g., amount) of the composite cathode active material excessively decreases, the energy density of a secondary battery may decrease. If (e.g., when) the content (e.g., amount) of the composite cathode active material excessively increases, the deterioration of the cathode may be accelerated due to a change in volume of the cathode during charging/discharging. In some embodiments, the cycle characteristics of an all-solid secondary battery 1 may deteriorate.

The cathode active material layer 12 may additionally include other cathode active materials in addition to the described composite cathode active material.

Other cathode active materials may include, for example, a $Li_2S$-containing composite. A $Li_2S$ composite may include, for example, a composite of $Li_2S$ and a carbon-based material, a composite of $Li_2S$, a carbon-based material, and a solid electrolyte, a composite of $Li_2S$ and a solid electrolyte, a composite of $Li_2S$ and a lithium salt, a composite of $Li_2S$ and a metal carbide, a composite of $Li_2S$, a carbon-based material, and a metal carbide, a composite of $Li_2S$ and a metal nitride, a composite of $Li_2S$, a carbon-based material, and a metal nitride, or a combination thereof.

For example, the composite of $Li_2S$ and the carbon-based material may include the $Li_2S$ and the carbon-based material. The carbon-based material may be defined as for the described carbon-based material of the composite cathode active material. A method of preparing a composite of $Li_2S$ and a carbon-based material may be a dry method, a wet method, or a combination thereof, but one or more embodiments are not limited thereto. Any method utilized in the art may be utilized. The method of preparing a composite of $Li_2S$ and a carbon-based material may include, for example, milling, heat treatment, deposition, and/or the like, but one or more embodiments are not necessarily limited thereto. Any method utilized in the art may be utilized.

The composite of $Li_2S$, the carbon-based material, and the solid electrolyte may include the carbon-based material and the solid electrolyte. The carbon-based material may be defined as for the described composite of $Li_2S$ and the carbon-based material. As the solid electrolyte, for example, any material utilized as an ion conductive material in the art may be utilized. The solid electrolyte may be, for example, an inorganic solid electrolyte. The solid electrolyte may be, for example, a crystalline solid electrolyte, an amorphous solid electrolyte, or a combination thereof. The solid electrolyte may be, for example, a sulfide-based solid electrolyte, an oxide-based solid electrolyte, or a combination thereof. The sulfide-based solid electrolyte may include, for example, Li, S, and P and may optionally further include a halogen element. The sulfide-based solid electrolyte may be selected from sulfide-based solid electrolytes utilized in an electrolyte layer. For example, the sulfide-based solid electrolyte may have an ionic conductivity of $1 \times 10^{-5}$ S/cm or more at room temperature. The oxide-based solid electrolyte may include, for example, Li, O, and a transition metal element and may optionally further include other elements. For example, the oxide-based solid electrolyte may be a solid electrolyte having an ionic conductivity of $1 \times 10^{-5}$ S/cm or more at room temperature. The oxide-based solid electrolyte may be selected from oxide-based solid electrolytes utilized in an electrolyte layer.

The composite of $Li_2S$ and the solid electrolyte may include the solid electrolyte. The solid electrolyte may be defined as for the described composite of $Li_2S$, the carbon-based material, and the solid electrolyte.

The composite of $Li_2S$ and the lithium salt may include the $Li_2S$ and the lithium salt. The lithium salt may be defined as for the described lithium salt of the composite cathode active material. The lithium salt may include at least one lithium halide compound selected from among LiF, LiCl, LiBr, and LiI. The composite of $Li_2S$ and the lithium salt may be, for example, a composite of $Li_2S$ and a lithium halide. The composite of $Li_2S$ and the lithium salt may include a lithium halide compound and thus may provide further improved ionic conductivity. The composite of $Li_2S$ and the lithium salt may be distinguished from a simple mixture of $Li_2S$, a carbon-based material, and a lithium salt. A simple mixture of $Li_2S$ and a lithium salt may fail to maintain a dense interface between $Li_2S$ and a lithium salt to provide high interfacial resistance, resulting in a reduction in lifespan characteristics of an all-solid secondary battery.

The composite of $Li_2S$ and the metal carbide may include the metal carbide. The metal carbide may be, for example, a two-dimensional metal carbide. The two-dimensional metal carbide may be represented, for example, by $M_{n+1}C_nT_x$, wherein M is a transition metal, T is an end group, T is O, OH, and/or F, n=1, 2, or 3, and x is the number of end groups. The two-dimensional metal carbide may be, for example, $Ti_2CT_x$, $(Ti_{0.5}, Nb_{0.5})_2CT_x$, $Nb_2CT_x$, $V_2CT_x$, $Ti_3C_2T_x$, $(V_{0.5}, Cr_{0.5})_3C_2T_x$, $Ti_3CNT_x$, $Ta_4C_3T_x$, $Nb_4C_3T_x$, or a combination thereof. The surface of the two-dimensional metal carbide may be terminated with O, OH, and/or F.

The composite of $Li_2S$, the carbon-based material, and the metal carbide may include the carbon-based material and the metal carbide. The carbon-based material may be defined as for the described composite of $Li_2S$ and the carbon-based material. The metal carbide may be defined as for the described composite of $Li_2S$ and the metal carbide.

The composite of $Li_2S$ and the metal nitride may include the metal nitride. The metal nitride may be, for example, a two-dimensional metal nitride. The two-dimensional metal nitride may be represented, for example, by $M_{n+1}N_nT_x$, wherein M is a transition metal, T is an end group, T is O, OH, and/or F, n=1, 2, or 3, and x is the number of end groups. The surface of the two-dimensional metal nitride may be terminated with O, OH, and/or F.

The composite of $Li_2S$, the carbon-based material, and the metal nitride may include the carbon-based material and the metal nitride. The carbon-based material may be defined as for the described composite of $Li_2S$ and the carbon-based material. The metal carbide may be defined as for the described composite of $Li_2S$ and the metal nitride.

For example, the cathode active material layer 12 may additionally include a sulfide-based compound that is distinguished from the described cathode active material. The sulfide-based compound may be, for example, a compound including a sulfur element and a metal element other than Li. For example, the sulfide-based compound may be a compound including a sulfur element and at least one of metal elements which have an atomic weight of 10 or more and belong to Groups 1 to 14 of the periodic table of elements. The sulfide-based compound may be, for example, $FeS_2$, $VS_2$, NaS, MnS, FeS, NiS, CuS, or a combination thereof. The cathode active material layer 12 may additionally include the sulfide-based compound so that the cycle characteristics of an all-solid secondary battery may be further improved. The content (e.g., amount) of the sulfide-based compound included in the cathode active material layer 12 may be 10 wt% or less, 5 wt% or less, 3 wt% or less, or 1 wt% or less of the total weight of the cathode active material layer 12.

**Cathode: Solid electrolyte**

The cathode active material layer 12 may further include, for example, a solid electrolyte. The solid electrolyte may be, for example, a sulfide-based solid electrolyte. The solid electrolyte included in the cathode 10 may be the same as or different from a solid electrolyte included in an electrolyte layer 30. The solid electrolyte may be as defined in the part of the electrolyte layer 30.

A D50 average particle diameter of the solid electrolyte (in the form of particles) included in the cathode active material layer 12 may be less than a D50 average particle diameter of the solid electrolyte included in the electrolyte layer 30. For example, the D50 average particle diameter of the solid electrolyte included in the cathode active material layer 12 may be 90 % or less, 80 % or less, 70 % or less, and 60 % or less, 50 % or less, 40 % or less, 30 % or less, or 20 % or less of the D50 average particle diameter of the solid electrolyte included in the electrolyte layer 30. The D50 average particle diameter may be, for example, a median particle diameter (D50). The median particle diameter (D50) may be a particle size corresponding to a 50 % cumulative volume if (e.g., when) a particle size distribution measured through a laser diffraction method is calculated from particles having a smaller particle size.

The solid electrolyte may be included in a range of about 10 parts by weight to about 60 parts by weight, about 10 parts by weight to about 50 parts by weight, about 20 parts by weight to about 50 parts by weight, or about 30 parts by weight to about 50 parts by weight with respect to about 100 parts by weight of the cathode active material layer 12. If (e.g., when) the content (e.g., amount) of the solid electrolyte excessively decreases, due to an increase in internal resistance of the cathode 10, the cycle characteristics of a secondary battery may deteriorate. If (e.g., when) the content (e.g., amount) of the sulfide-based solid electrolyte excessively increases, the energy density of the all-solid secondary battery 1 may decrease.

**Cathode: Conductive material**

The cathode active material layer 12 may further include a conductive material. The conductive material may be, for example, a carbon-based conductive material, a metal-based conductive material, or a combination thereof. The carbon-based conductive material may be, for example, graphite, carbon black (CB), acetylene black (AB), Ketjen black (KB), a carbon fiber, or a combination thereof, but one or more embodiments are not limited thereto. Any material utilized as a carbon-based conductive material in the art may be utilized. The metal-based conductive material may be a metal powder, a metal fiber, or a combination thereof, but one or more embodiments are not limited thereto. Any material utilized as a metal-based conductive material in the art may be utilized. The content (e.g., amount) of the conductive material included in the cathode active material layer 12 may be, for example, in a range of about 1 wt% to about 30 wt%, about 1 wt% to about 20 wt%, or about 1 wt% to about 10 wt% of the total weight of the cathode active material layer 12.

The cathode active material layer 12 may include a carbon-based material, and the carbon-based material may be provided only in the composite cathode active material. The cathode active material layer 12 may not additionally include a separate carbon-based material other than the composite cathode active material including the carbon-based material. The cathode active material layer may not include (e.g., may exclude) the separate carbon-based material so that the energy density of the cathode 10 and the all-solid secondary battery 1 may be improved and a manufacturing process may be simplified.

## Cathode: Binder

The cathode active material layer 12 may further include a binder. The binder may include, for example, styrene butadiene rubber (SBR), polytetrafluoroethylene, polyvinylidene fluoride (PVDF), polyethylene (PE), and/or the like, but one or more embodiments are not limited thereto. Any material utilized as a binder in the art may be utilized. The content (e.g., amount) of the binder included in the cathode active material layer 12 may be, for example, in a range of about 1 wt% to about 10 wt% of the total weight of the cathode active material layer 12. The binder may not be provided.

## Cathode: Other additives

In addition to the described cathode active material, solid electrolyte, binder, and conductive material, the cathode active material layer 12 may further include, for example, additives such as a filler, a coating agent, a dispersant, and an ion-conductive adjuvant.

As a filler, a coating agent, a dispersant, an ion-conductive adjuvant, and/or the like that may be included in the cathode active material layer 12, suitable materials generally utilized in electrodes of an all-solid secondary battery may be utilized.

## Cathode: Cathode current collector

The cathode current collector 11 may be provided as a plate, foil, and/or the like consisting of, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof. The cathode current collector 11 may not be provided. A thickness of the cathode current collector 11 may be, for example, in a range of about 1 $\mu$m to about 100 $\mu$m, about 1 $\mu$m to about 50 $\mu$m, about 5 $\mu$m to about 25 $\mu$m, or about 10 $\mu$m to about 20 $\mu$m.

The cathode current collector 11 may include, for example, a base film and a metal layer provided on at least one surface (e.g., one surface or two surfaces) of the base film. The base film may include, for example, a polymer. The polymer may be, for example, a thermoplastic polymer. The polymer may include, for example, polyethylene terephthalate (PET), PE, polypropylene (PP), polybutylene terephthalate (PBT), polyimide (PI), or a combination thereof. The base film may be, for example, an insulator. The base film may include an insulating thermoplastic polymer, and thus if (e.g., when) a short circuit occurs, the base film may soften or liquefy to interrupt the operation of a battery, thereby suppressing a rapid increase in current. The metal layer may include, for example, indium (In), copper (Cu), magnesium (Mg), stainless steel, titanium (Ti), iron (Fe), cobalt (Co), nickel (Ni), zinc (Zn), aluminum (Al), germanium (Ge), or an alloy thereof. The metal layer may serve as an electrochemical fuse to be cut if (e.g., when) an overcurrent occurs, thereby performing a short circuit prevention function. A thickness of the metal layer may be adjusted to adjust a limit current and a maximum current. The metal layer may be plated or deposited on the base film. If (e.g., when) the thickness of the metal layer is decreased, a limit current and/or a maximum current of the cathode current collector 11 may be decreased, and thus the stability of a lithium battery during a short circuit may be improved. A lead tab may be added onto the metal layer for external connection. The lead tab may be welded to the metal layer or a metal layer/base film stack through ultrasonic welding, laser welding, spot welding, and/or the like. While the base film and/or the metal layer are melted during welding, the metal layer may be electrically connected to the lead tab. In order to more strongly weld the metal layer and the lead tab, a metal chip may be added between the metal layer and the lead tab. The metal chip may be a flake consisting of the same material as a metal of the metal layer. The metal chip may be, for example, metal foil or a metal mesh. The metal chip may be, for example, aluminum foil, copper foil, or SUS (stainless steel) foil. The metal chip may be provided on the metal layer and then welded to the lead tab, and thus the lead tab may be welded to a metal chip/metal layer stack or a metal chip/metal layer/base film stack. During welding, while the base film, the metal layer, and/or the metal chip are melted, the metal layer or a metal layer/metal chip stack may be electrically connected to the lead tab. A metal chip and/or a lead tab may be added onto a portion of the metal layer. A thickness of the base film may be, for example, in a range of about 1 $\mu$m to $\mu$m 50 $\mu$m, about 1.5 $\mu$m to about 50 $\mu$m, about 1.5 $\mu$m to about 40 $\mu$m, or about 1 $\mu$m to about 30 $\mu$m. The base film may have a thickness in such ranges, and thus a weight of an electrode assembly may be more effectively reduced. A melting point of the base film may be, for example, in a range of about 100 °C to about 300 °C, about 100 °C to about 250 °C, or about 100 °C to about 200 °C. The base film may have a melting point in such ranges, and thus the base film may be melted and easily coupled to the lead tab in a process of welding the lead tab. In order to improve adhesive strength between the base film and the metal layer, surface treatment such as corona treatment may be performed on the base film. The thickness of the metal layer may be, for example, in a range of about 0.01 $\mu$m to about 3 $\mu$m, about 0.1 $\mu$m to about 3 $\mu$m, about 0.1 $\mu$m to about 2 $\mu$m, or about 0.1 $\mu$m to about 1 $\mu$m. The metal layer may have a thickness in such ranges, and thus the stability of an electrode assembly may be secured while conductivity is maintained. A thickness of the metal chip may be, for example, in a range of about 2 $\mu$m to about 10 $\mu$m, about 2 $\mu$m to about 7 $\mu$m, or about 4 $\mu$m to about 6 $\mu$m. The metal chip may have a thickness in such ranges, and thus the metal layer and the lead tab may be more easily connected. The cathode current collector 11 may have such a structure, and thus the weight of the cathode 10 may be reduced, thereby improving the energy density of the cathode 10 and a lithium battery.

**Cathode: Inactive member**

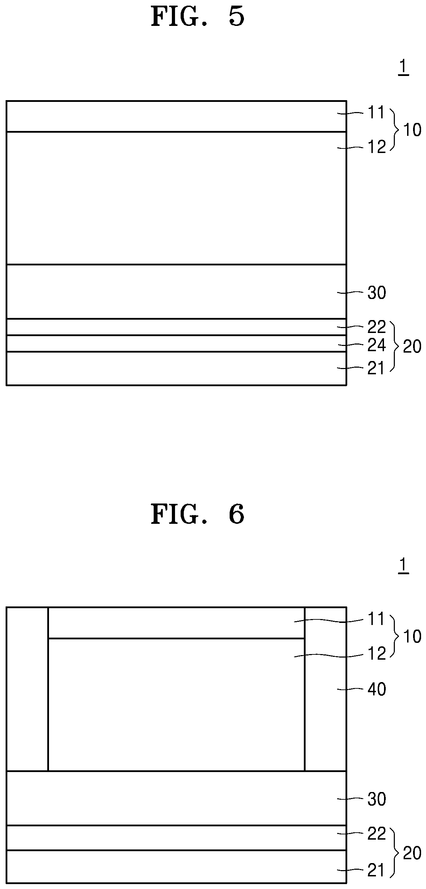

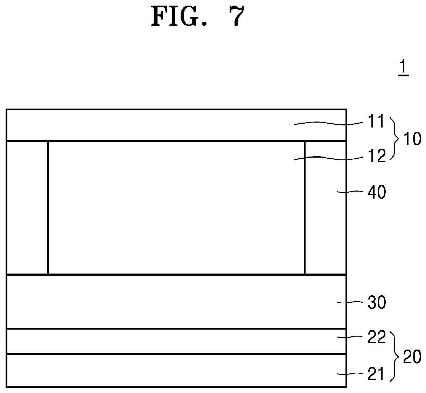

Referring to FIGS. 6 and 7, the cathode 10 may include the cathode current collector 11 and the cathode active material layer 12 provided on one surface of the cathode current collector 11. An inactive member 40 may be provided on one side surface of the cathode 10. Referring to FIG. 6, the inactive member 40 may be provided on one side surface of each of the cathode active material layer 12 and the cathode current collector 11. Referring to FIG. 7, the inactive member 40 may be provided on one side surface of the cathode active material layer 12 and may be provided between the electrolyte layer 30 and the cathode current collector 11 opposing or facing the electrolyte layer 30. The inactive member 40 may not be provided on one side surface of the cathode current collector 11. The electrolyte layer 30 may be, for example, a solid electrolyte layer.

The inactive member 40 may be provided to prevent or reduce cracks of the electrolyte layer 30 during manufacturing and/or charging/discharging of the all-solid secondary battery 1, thereby improving the cycle characteristics of the all-solid secondary battery 1. In the all-solid secondary battery 1 that does not include the inactive member 40, a nonuniform pressure may be applied to the electrolyte layer 30 in contact with the cathode 10 during manufacturing and/or charging/discharging of the all-solid secondary battery 1 to cause cracks in the electrolyte layer 30, and a lithium metal may be grown through the cracks to increase a possibility of the occurrence of a short circuit.

In the all-solid secondary battery 1, a thickness of the inactive member 40 may be greater than or equal to the thickness of the cathode active material layer 12. In other embodiments, in the all-solid secondary battery 1, the thickness of the inactive member 40 may be substantially equal to the thickness of the cathode 10. The thickness of the inactive member 40 may be equal to the thickness of the cathode 10, and thus a substantially uniform pressure may be applied between the cathode 10 and the electrolyte layer 30, and the cathode 10 and the electrolyte layer 30 may be in sufficiently close contact with each other, thereby reducing interfacial resistance between the cathode 10 and the electrolyte layer 30. In some embodiments, the electrolyte layer 30 may be sufficiently sintered during a process of pressing and manufacturing the all-solid secondary battery 1, thereby reducing the internal resistance of the electrolyte layer 30 and the all-solid secondary battery 1 including the same.

The inactive member 40 may surround (or be around) the side surface of the cathode 10 and may be in contact with the electrolyte layer 30. The inactive member 40 may surround (or be around) the side surface of the cathode 10 and may be in contact with the electrolyte layer 30, thereby effectively suppressing cracks of the electrolyte layer 30, which are caused in a portion of the electrolyte layer 30, which is not in contact with the cathode 10, by a pressure difference during a pressing process. The inactive member 40 may surround (or be around) the side surface of the cathode 10 and may be separated from an anode 20, for example, a first anode active material layer 22. The inactive member 40 may surround (or be around) the side surface of the cathode 10, may be in contact with the electrolyte layer 30, and may be separated from the anode 20. In some embodiments, a possibility of a short circuit occurring due to physical contact between the cathode 10 and the first anode active material layer 22 or a possibility of a short circuit occurring due to the overcharging of lithium may be suppressed or reduced. For example, the inactive member 40 may be provided on one side surface of the cathode active material layer 12 and concurrently (e.g., simultaneously) may be provided on one side surface of the cathode current collector 11, thereby more effectively suppressing a possibility of a short circuit occurring due to contact between the cathode current collector 11 and the anode 20.

Referring to FIGS. 6 and 7, the inactive member 40 may extend from one side surface of the cathode 10 to an end portion of the electrolyte layer 30. The inactive member 40 may extend to the end portion of the electrolyte layer 30 so that cracks occurring at the end portion of the electrolyte layer 30 may be suppressed or reduced. The end portion of the electrolyte layer 30 may be an outermost portion in contact with a side surface of the electrolyte layer 30. The inactive member 40 may extend to the outermost portion in contact with the side surface of the electrolyte layer 30. The inactive member 40 may be separated from the anode 20, for example, the first anode active material layer 22. The inactive member 40 may extend to the end portion of the electrolyte layer 30, but may not be in contact with the anode 20. For example, the inactive member 40 may fill a space extending from one side surface of the cathode 10 to the end portion of the electrolyte layer 30.

Referring FIGS. 6 to 7, a width of the inactive member 40 extending from one side surface of the cathode 10 to the end portion of the electrolyte layer 30 may be, for example, in a range of about 1 % to about 30 %, about 1 % to about 25 %, about 1 % to about 20 %, about 1 % to about 15 %, about 1 % to about 10 %, or about 1 % to about 5 % of a width between one side surface of the cathode 10 and the other side surface opposite to the one side surface. If (e.g., when) the width of the inactive member 40 is excessively wide, the energy density of the all-solid secondary battery 1 may be reduced. If (e.g., when) the width of the inactive member 40 is excessively narrow, an effect of arranging the inactive member 40 may be insignificant.

An area of the cathode 10 may be smaller than an area of the electrolyte layer 30 in contact with the cathode 10. The inactive member 40 may be provided to surround the side surface of the cathode 10 to compensate for a difference in area between the cathode 10 and the electrolyte layer 30. An area of the inactive member 40 may compensate for the difference between the area of the cathode 10 and the area of the electrolyte layer 30, thereby effectively preventing or reducing cracks of the electrolyte layer 30 caused by a pressure difference during a pressing process. For example, the sum of the area of the cathode 10 and the area of the inactive member 40 may be equal to the area of the electrolyte layer 30. The electrolyte layer 30 may be, for example, a solid electrolyte layer.

The area of the cathode 10 may be, for example, less than 100 %, 99 % or less, 98 % or less, 97 % or less, 96 % or less, or 95 % or less of the area of the electrolyte layer 30. The area of the cathode 10 may be, for example, in a range of about 50 % to less than 100 %, about 50 % to about 99 %, about 55 % to about 98 %, about 60 % to about 97 %, about 70 % to about 96 %, about 80 % to about 95 %, or about 85 % to about 95 %.of the area of the electrolyte layer 30.

If (e.g., when) the area of the cathode 10 is greater than or equal to the area of the electrolyte layer 30, a short circuit may occur due to physical contact between the cathode 10 and the first anode active material layer 22, or a possibility of a short circuit occurring due to the overcharging of lithium may increase. The area of the cathode 10 may be, for example, equal to an area of the cathode active material layer 12. The area of the cathode 10 may be, for example, equal to an area of the cathode current collector 11.

The area of the inactive member 40 may be, for example, 50 % or less, 40 % or less, 30 % or less, 20 % or less, or 10 % or less of the area of the cathode 10. The area of the inactive member 40 may be, for example, in a range of about 1 % to about 50 %, about 5 % to about 40 %, about 5 % to about 30 %, about 5 % to about 20 %, or about 5 % to about 15 % of the area of the cathode 10.

An area S1 of the cathode 10 may be smaller than an area S4 of an anode current collector 21. The area S1 of the cathode 10 may be, for example, less than 100 %, 99 % or less, 98 % or less, 97 % or less, 96 % or less, or 95 % or less of the area S4 of the anode current collector 21. The area S1 of the cathode 10 may be, for example, in a range of about 50 % to less than 100 %, about 50 % to about 99 %, about 55 % to about 98 %, about 60 % to about 97 %, about 70 % to about 96 %, about 80 % to about 95 %, or about 85 % to about 95 % of the area S4 of the anode current collector 21. The area S4 of the anode current collector 21 may be, for example, equal to an area of the anode 20. The area S4 of the anode current collector 21 may be, for example, equal to an area of the first anode active material layer 22.

In the present disclosure, "equal" area, length, width, thickness, and/or shape may include all cases of having "substantially equal" area, length, width, thickness, and/or shape, excluding a case in which areas, lengths, widths, thicknesses, and/or shapes are intentionally different from each other. "Equal" area, length, width, and/or thickness includes a range in which the unintended difference in area, length, width, and/or thickness between compared objects is, for example, less than 3 %, less than 2 %, less than 1 %, less than 0.5 %, or less than 0.1 %.

The thickness of the inactive member 40 may be, for example, greater than a thickness of the first anode active material layer 22. The thickness of the first anode active material layer 22 may be, for example, 50 % or less, 40 % or less, 30 % or less, 20 % or less, or 10 % or less of the thickness of the inactive member 40. The thickness of the first anode active material layer 22 may be, for example, in a range of about 1 % to about 50 %, about 1 % to about 40 %, about 1 % to about 30 %, about 1 % to about 20 %, or about 1 % to about 10 % of the thickness of the inactive member 40.

The inactive member 40 may be a gasket. By utilizing the gasket as the inactive member 40, cracks of the electrolyte layer 30 caused by a pressure difference during a pressing process may be effectively suppressed or reduced.

The inactive member 40 may have, for example, a single-layer structure. In other embodiments, although not shown in the drawings, the inactive member 40 may have a multi-layer structure. In the inactive member 40 having the multi-layer structure, respective layers may have different compositions. The inactive member 40 having the multi-layer structure may have, for example, a two-layer structure, a three-layer structure, a four-layer structure, or a five-layer structure. The inactive member 40 having the multi-layer structure may include, for example, one or more adhesive layers and one or more support layers. For example, the adhesive layer may effectively prevent or reduce separation between the cathode 10 and the electrolyte layer 30 due to a change in volume of the cathode 10 which occurs during a charging/-

discharging process of the all-solid secondary battery 1 and may provide a binding force between the support layer and other layers to improve the film strength of the inactive member 40. The support layer may provide a supporting force to the inactive member 40, may prevent or reduce the nonuniformity of pressure applied to the electrolyte layer 30 during a pressing process or a charging/discharging process, and may prevent or reduce the shape deformation of the all-solid secondary battery 1 to be manufactured.

The inactive member 40 may be, for example, a flame-retardant inactive member. The flame-retardant inactive member may provide flame retardancy to prevent or reduce a possibility of thermal runaway and ignition of the all-solid secondary battery 1. In some embodiments, the safety of the all-solid secondary battery 1 may be further improved. The flame-retardant inactive member may be to absorb residual moisture in the all-solid secondary battery 1, thereby preventing or reducing the deterioration of the all-solid secondary battery 1 and improving the lifespan characteristics of the all-solid secondary battery 1.

The flame-retardant inactive member may include, for example, a matrix and a filler. The matrix may include, for example, a substrate and a reinforcing material. The matrix may include, for example, a fibrous substrate and a fibrous reinforcing material. The matrix may include the substrate to have elasticity. In some embodiments, the matrix may effectively accommodate a change in volume of the all-solid secondary battery 1 during charging/discharging and may be provided at any one of one or more suitable positions. The substrate included in the matrix may include, for example, a first fibrous material. By including the first fibrous material, the substrate may effectively accommodate a change in volume of the cathode 10 which occurs during a charging/discharging process of the all-solid secondary battery 1 and may effectively suppress or reduce the deformation of the inactive member 40 due to the change in volume of the cathode 10. The first fibrous material may be, for example, a material having an aspect ratio of 5 or more, 20 or more, or 50 or more. The first fibrous material may be, for example, a material having an aspect ratio of about 5 to about 1,000, about 20 to about 1,000, or about 50 to about 1,000. The first fibrous material may be, for example, an insulating material. The first fibrous material may be an insulating material, and thus a short circuit between the cathode 10 and the anode 20, which occur due to lithium dendrites and/or the like during charging/discharging of the all-solid secondary battery 1, may be effectively prevented or reduced. The first fibrous material may include, for example, at least one selected from among a pulp fiber, an insulating polymer fiber, and an ion conductive polymer fiber. The matrix may include the reinforcing material, and thus the strength thereof may be improved. In some embodiments, the matrix may prevent or reduce an excessive change in volume of the all-solid secondary battery 1 during changing/discharging and may prevent or reduce the deformation of the all-solid secondary battery 1. The reinforcing material included in the matrix may include, for example, a second fibrous material. The reinforcing material may include the second fibrous material, and thus the strength of the matrix may more uniformly increase. The second fibrous material may be, for example, a material having an aspect ratio of 3 or more, 5 or more, or 10 or more. The second fibrous material may be, for example, a material having an aspect ratio of about 3 to about 100, about 5 to about 100, or about 10 to about 100. The second fibrous material may be, for example, a flame-retardant material. The second fibrous material may be the flame-retardant material, and thus ignition due to thermal runaway occurring during a charging/discharging process of the all-solid secondary battery 1 or an external impact may be effectively suppressed or reduced. The second fibrous material may include, for example, a glass fiber, a metal oxide fiber, or a ceramic fiber.

The flame-retardant inactive member may include the filler in addition to the matrix. The filler may be provided in the matrix, on a surface of the matrix, or both (e.g., simultaneously) in the matrix and on the surface. The filler may include, for example, an inorganic material. The filler included in the flame-retardant inactive member may be, for example, a moisture getter. For example, the filler may adsorb moisture at a temperature of less than 100 °C to remove moisture remaining in the all-solid secondary battery 1, thereby preventing or reducing the deterioration of the all-solid secondary battery 1. In some embodiments, if (e.g., when) a temperature of the all-solid secondary battery 1 increases to 150 °C or more due to thermal runaway occurring during a charging/discharging process of the all-solid secondary battery 1 or an external impact, the filler may release the adsorbed moisture to effectively suppress or reduce the ignition of the all-solid secondary battery 1. In other embodiments, the filler may be, for example, a flame retardant. The filler may be, for example, a metal hydroxide having moisture adsorption properties. The metal hydroxide included in the filler may be, for example, $Mg(OH)_2$, $Fe(OH)_3$, $Sb(OH)_3$, $Sn(OH)_4$, $Tl(OH)_3$, $Zr(OH)_4$, $Al(OH)_3$, or a combination thereof. The content (e.g., amount) of the filler included in the flame-retardant inactive member may be, for example, in a range of about 10 parts by weight to about 80 parts by weight, about 20 parts by weight to about 80 parts by weight, about 30 parts by weight to about 80 parts by weight, about 40 parts by weight to about 80 parts by weight, about 50 parts by weight to about 80 parts by weight, about 60 parts by weight to about 80 parts by weight, or about 65 parts by weight to about 80 parts by weight with respect to about 100 parts by weight of the flame-retardant inactive member.

The flame-retardant inactive member may further include, for example, a binder. The binder may include, for example, a curable polymer or a non-curable polymer. The curable polymer may be a polymer that is cured by heat and/or pressure. The curable polymer may be, for example, a solid at room temperature. The flame-retardant inactive member may include, for example, a heat-press curable film and/or a cured product thereof. A heat-press curable polymer may be, for example, TSA-66 by Toray.

The flame-retardant inactive member may additionally include other materials in addition to the described substrate, reinforcing material, filler, and binder. The flame-retardant inactive member may further include, for example, at least one selected from among paper, an insulating polymer, an ion-conductive polymer, an insulating inorganic material, an oxide-based solid electrolyte, and a sulfide-based solid electrolyte. The insulating polymer may be, for example, an olefin-based polymer such as PP or PE.

A density of the substrate or the reinforcing material included in the flame-retardant inactive member may be, for example, in a range of about 10 % to about 300 %, about 10 % to about 150 %, about 10 % to about 140 %, about 10 % to about 130 %, or about 10 % to about 120 % of a density of the cathode active material included in the cathode active material layer 12.

The inactive member 40 may be a member that does not include an electrochemically active material, for example, an electrode active material. The electrode active material may be a material that absorbs/desorbs lithium. The inactive member 40 may be a member consisting of a material utilized in the art other than an electrode active material.

**All-solid secondary battery**

An all-solid secondary battery according to embodiments may include the described cathode, an anode, and an electrolyte layer provided between the cathode and the anode. The anode may include an anode current collector and a first anode active material layer provided on one surface of the anode current collector.

Referring to FIGS. 3 to 7, the all-solid secondary battery 1 may include the cathode 10, the anode 20, and the electrolyte layer 30 provided between the cathode 10 and the anode 20. The anode 20 may include the anode current collector 21 and the first anode active material layer 22 provided on one surface of the anode current collector 21.

**Cathode**

A cathode may be defined as for the described cathode.

**Anode**

**Anode: Anode active material**

Referring to FIGS. 3 to 7, the anode 20 may include the first anode active material layer 22. The first anode active material layer 22 may include, for example, an anode active material and a binder.

The anode active material included in the first anode active material layer 22 may be, for example, an anode material that may form an alloy or compound together with lithium.

The anode active material included in the first anode active material layer 22 may have, for example, a particle form, i.e., the anode active material may be in a form of particles. An average particle diameter of the anode active material having the particle form may be, for example, 4 $\mu$m or less, 3 $\mu$m or less, 2 $\mu$m or less, 1 $\mu$m or less, 500 nm or less, 300 nm or less, or 100 nm or less. The average particle diameter of the anode active material having the particle form may be, for example, in a range of about 10 nm to about 4 $\mu$m, about 10 nm to about 3 $\mu$m, about 10 nm to about 2 $\mu$m, about 10 nm to about 1 $\mu$m, about 10 nm to about 500 nm, about 10 nm to about 300 nm, or about 10 nm to about 100 nm. The anode active material may be in the form of particles and have an average particle diameter in such ranges, and thus the reversible absorbing and/or desorbing of lithium may be facilitated more easily during charging/discharging. The average particle diameter of the anode active material may be, for example, a median diameter (D50) measured by utilizing a laser type or kind particle size distribution meter.

The anode active material included in the first anode active material layer 22 may include, for example, at least one selected from a carbon-based anode active material and a metal or metalloid anode active material.

The carbon-based anode active material may include, for example, amorphous carbon, crystalline carbon, porous carbon, or a combination thereof.

The carbon-based anode active material may be, for example, amorphous carbon. Examples of the amorphous carbon may include carbon black (CB), acetylene black (AB), furnace black (FB), Ketjen black (KB), graphene, and/or the like, but one or more embodiments are not necessarily limited thereto. Any material classified as amorphous carbon in the art may be utilized. The amorphous carbon may be carbon that has no crystallinity or very low crystallinity and may be distinguished from crystalline carbon or graphite-based carbon.

The carbon-based anode active material may be, for example, porous carbon. A pore volume of the porous carbon may be, for example, in a range of about 0.1 cc/g to about 10.0 cc/g, about 0.5 cc/g to about 5 cc/g, or about 0.1 cc/g to about 1 cc/g. An average pore diameter of the porous carbon may be, for example, in a range of about 1 nm to about 50 nm, about 1 nm to about 30 nm, or about 1 nm to about 10 nm. A Brunauer-Emmett-Teller (BET) specific surface area of the porous carbon may be, for example, in a range of about 100 m$^2$/g to about 3,000 m$^2$/g.

The metal or metalloid anode active material may include at least one selected from among gold (Au), platinum (Pt), palladium (Pd), silicon (Si), silver (Ag), aluminum (Al), bismuth (Bi), tin (Sn), and zinc (Zn), but one or more embodiments are not necessarily limited thereto. Any material, which is utilized as a metal anode active material or a metalloid anode active material and forms an alloy or compound together with lithium in the art, may be utilized. For example, nickel (Ni) may not form an alloy together with lithium and thus may not be a metal anode active material.

The first anode active material layer 22 may include one type or kind of anode active material among such anode active materials or a mixture of a plurality of different anode active materials. For example, the first anode active material layer 22 may include only amorphous carbon or may include at least one selected from among gold (Au), platinum (Pt), palladium (Pd), silicon (Si), silver (Ag), aluminum (Al), bismuth (Bi), tin (Sn), and zinc (Zn). In other embodiments, the first anode active material layer 22 may include a mixture of amorphous carbon and at least one selected from among gold (Au), platinum (Pt), palladium (Pd), silicon (Si), silver (Ag), aluminum (Al), bismuth (Bi), tin (Sn), and zinc (Zn). A mixing ratio of the mixture of amorphous carbon to gold and/or the like may be, for example, in a range of about 99:1 to about 1:99, about 10:1 to about 1:2, about 5:1 to about 1:1, or about 4:1 to about 2:1 (based on weight), but one or more embodiments are not necessarily limited to such ranges. The mixing ratio may be selected according to the required characteristics of the all-solid secondary battery 1. The anode active material may have such a composition, and thus the cycle characteristics of the all-solid secondary battery 1 may be further improved.

The anode active material included in the first anode active material layer 22 may include, for example, a mixture of first particles and second particles. For examples, that first particles may include, or be consisting of, amorphous carbon and the second particles may include, or be consisting of, a metal or metalloid. Examples of the metal or metalloid may include gold (Au), platinum (Pt), palladium (Pd), silicon (Si), silver (Ag), aluminum (Al), bismuth (Bi), tin (Sn), zinc (Zn), and/or the like. In other embodiments, the metalloid may be a semiconductor. The content (e.g., amount) of the second particles may be in a range of about 1 wt% to about 99 wt%, about 1 wt% to about 60 wt%, about 8 wt% to about 60 wt%, about 10 wt% to about 50 wt%, about 15 wt% to about 40 wt%, or about 20 wt% to about 30 wt% with respect to the total weight of the mixture. The second particles may have a content (e.g., amount) in such ranges, and thus, for example, the cycle characteristics of the all-solid secondary battery 1 may be further improved.

In other embodiments, the first anode active material layer 22 may include a composite anode active material. The composite anode active material may include, for example, a carbon-based support and a metal-based anode active material supported on the carbon-based support. The composite anode active material may have such a structure so that the localization of the metal-based active material in the first anode active material layer 22 may be prevented or reduced, and the substantially uniform distribution thereof may be obtained. In some embodiments, the cycle characteristics of the all-solid secondary battery 1 including the first anode active material layer 22 may be further improved.

The metal-based anode active material supported on the carbon-based support may include, for example, a metal, a metal oxide, a composite of a metal and a metal oxide, or a combination thereof. Examples of the metal may include gold (Au), platinum (Pt), palladium (Pd), silicon (Si), silver (Ag), aluminum (Al), bismuth (Bi), tin (Sn), and tellurium (Te), zinc (Zn), and/or the like. Examples of the metal oxide may include gold (Au) oxide, platinum (Pt) oxide, palladium (Pd) oxide, silicon (Si) oxide, silver (Ag) oxide, aluminum (Al) oxide, bismuth (Bi) oxide, tin (Sn) oxide, tellurium (Te) oxide, zinc (Zn) oxide, and/or the like. The metal oxide may include, for example, $Au_xO_y$, wherein $0<x\leq2$ and $0<y\leq3$, $Pt_xO_y$, wherein $0<x\leq1$ and $0<y\leq2$, $Pd_xO_y$, wherein $0<x\leq1$ and $0<y\leq1$, $Si_xO_y$, wherein $0<x\leq1$ and $0<y\leq2$, $Ag_xO_y$, wherein $0<x\leq2$ and $0<y\leq1$, $Al_xO_y$, wherein $0<x\leq2$ and $0<y\leq3$, $Bi_xO_y$, wherein $0<x\leq2$ and $0<y\leq3$, $Sn_xO_y$, wherein $0<x\leq1$ and $0<y\leq2$, $Te_xO_y$, wherein $0<x\leq1$ and $0<y\leq3$, $Zn_xO_y$, wherein $0<x\leq1$ and $0<y\leq1$, or a combination thereof. The composite of the metal and the metal oxide may include, for example, a composite of Au and $Au_xO_y$, wherein $0<x\leq2$ and $0<y\leq3$, a composite of Pt and $Pt_xO_y$, wherein $0<x\leq1$ and $0<y\leq2$, a composite of Pd and $Pd_xO_y$, wherein $0<x\leq1$ and $0<y\leq1$, a composite of Si and $Si_xO_y$, wherein $0<x\leq1$ and $0<y\leq2$, a composite of Ag and $Ag_xO_y$, wherein $0<x\leq2$ and $0<y\leq1$, a composite of Al and $Al_xO_y$, wherein $0<x\leq2$ and $0<y\leq3$, a composite of Bi and $Bi_xO_y$, wherein $0<x\leq2$ and $0<y\leq3$, a composite of Sn and $Sn_xO_y$, wherein $0<x\leq1$ and $0<y\leq2$), a composite of Te and $Te_xO_y$, wherein $0<x\leq1$ and $0<y\leq3$, a composite of Zn and $Zn_xO_y$, wherein $0<x\leq1$ and $0<y\leq1$, or a combination thereof.

The carbon-based support may include, for example, amorphous carbon. Examples of the amorphous carbon may include CB, AB, FB, KB, graphene, activated carbon, CNFs, CNTs, and/or the like, but one or more embodiments are not necessarily limited thereto. Any material classified as amorphous carbon in the art may be utilized. The amorphous carbon may be carbon that has no crystallinity or very low crystallinity and may be distinguished from crystalline carbon or graphite-based carbon. A carbonaceous material may be, for example, a carbon-based anode active material.

The composite anode active material may have, for example, a particle form. A particle diameter of the composite anode active material having the particle form may be, for example, in a range of about 10 nm to about 4 $\mu$m, about 10 nm to about 1 $\mu$m, about 10 nm to about 500 nm, about 10 nm to about 200 nm, or about 10 nm to about 100 nm. The composite anode active material may have a particle diameter in such ranges, and thus the reversible absorbing and/or desorbing of lithium may be more easily facilitated during charging/discharging. The metal-based anode active material supported on the carbon-based support may have, for example, a particle form. A particle diameter of the metal-based anode active material may be, for example, in a range of about 1 nm to about 200 nm, about 1 nm to about 150 nm, about 5 nm to about 100 nm, or about 10 nm to about 50 nm. The carbon-based support may have, for example, a particle form. A particle diameter of the carbon-based support may be, for example, in a range of about 10 nm to about 2 μm, about 10 nm to about 1 μm, about 10 nm to about 500 nm, about 10 nm to about 200 nm, or about 10 nm to about 100 nm. The carbon-based support may have a particle diameter in such ranges and thus may be more uniformly provided in the first anode active material layer 22. The carbon-based support may be in the form of nanoparticles and may include, for example, nanoparticles having a particle diameter of 500 nm or less. The particle diameter of the composite anode active material, the particle diameter of the metal-based anode active material, and the particle diameter of the carbon-based support may each be, for example, an average particle diameter. The average particle diameter may be, for example, a median diameter (D50) measured by utilizing a laser type or kind particle size distribution meter. In other embodiments, the average particle diameter may be determined automatically by utilizing software, for example, from an electron microscope image or may be manually determined according to a manual.

**Anode: Binder**

The binder included in the first anode active material layer 22 is, for example, SBR, polytetrafluoroethylene, PVDF, PE, a vinylidene fluoride/hexafluoropropylene copolymer, polyacrylonitrile, polymethyl methacrylate, and/or the like, but one or more embodiments are not necessarily limited thereto. Any material usable as a binder in the art may be utilized. The binder may be provided as a single binder or a plurality of different binders.

The first anode active material layer 22 may include the binder and thus may be stabilized on the anode current collector 21. In some embodiments, cracks of the first anode active material layer 22 may be suppressed or reduced despite changes in a volume and/or relative position of the first anode active material layer 22 during a charging/discharging process. For example, if (e.g., when) the first anode active material layer 22 does not include a binder, the first anode active material layer 22 may be easily separated from the anode current collector 21. At a portion of the anode current collector 21 exposed due to the separation of the first anode active material layer 22 from the anode current collector 21, the anode current collector 21 may be in contact with the electrolyte layer 30, which may cause an increase in possibility of the occurrence of a short circuit. The first anode active material layer 22 may be formed, for example, by applying a slurry, in which a material constituting the first anode active material layer 22 is dispersed, onto the anode current collector 21 and drying the slurry. The first anode active material layer 22 may include the binder, and thus an anode active material may be stably distributed in a slurry. For example, if (e.g., when) the slurry is applied onto the anode current collector 21 through screen printing, the clogging of a screen (for example, clogging by aggregates of an anode active material) may be suppressed or reduced.

**Anode: Other additives**

The first anode active material layer 22 may further include additives utilized in the all-solid secondary battery 1 according to a related art, such as a filler, a coating agent, a dispersant, and an conductive adjuvant.

**Anode: Solid electrolyte**

The first anode active material layer 22 may further include a solid electrolyte. The solid electrolyte may be, for example, a material selected from solid electrolytes included in the electrolyte layer 30. The solid electrolyte included in the first anode active material layer 22 may serve as a reaction point at which a lithium metal starts to be formed in the first anode active material layer 22, may serve as a space in which the formed lithium metal is stored, or may serve as a path through which lithium ions are transferred. The solid electrolyte may not be provided.

In the first anode active material layer 22, for example, the content (e.g., amount) of the solid electrolyte may be high in a region adjacent to the electrolyte layer 30 and may be low in a region adjacent to the anode current collector 21. The solid electrolyte in the first anode active material layer 22 may have, for example, a concentration gradient in which a concentration decreases from the region adjacent to the electrolyte layer 30 to the region adjacent to the anode current collector 21.

**Anode: First anode active material layer**

A ratio B/A of an initial charge capacity B of the first anode active material layer 22 to an initial charge capacity A of the cathode active material layer 12 may be in a range of about 0.005 to about 0.5 or about 0.005 to about 0.45. The initial charge capacity of the cathode active material layer 12 may be determined at a maximum charging voltage vs. Li/Li$^+$ from a 1st open circuit voltage (OCV). The initial charge capacity of the first anode active material layer 22 may be determined at about 0.01 V vs. Li/Li$^+$ from a 2nd OCV.

The maximum charging voltage may be determined according to types (kinds) of cathode active materials. The maximum charging voltage may be, for example, about 1.5 V, about 2.0 V, about 2.5 V, about 3.0 V, about 3.5 V, about 4.0 V, about 4.2 V, or about 4.3 V. For example, the maximum charging voltage of a $Li_2S$ or a $Li_2S$ composite may be about 2.5 V vs. Li/Li+. For example, the maximum charging voltage of $Li_2S$ or the $Li_2S$ composite may be about 3.0 V vs. Li/Li+. The ratio B/A of the initial charge capacity B of the first anode active material layer 22 to the initial charge capacity A of the cathode active material layer 12 may be, for example, in a range of about 0.01 to about 0.5, about 0.01 to about 0.45, about 0.01 to about 0.4, about 0.01 to about 0.3, about 0.01 to about 0.2, or about 0.05 to about 0.1. The initial charge capacity (mAh) of the cathode active material layer 12 may be obtained by multiplying a charge specific capacity (mAh/g) of the cathode active material by a mass (g) of the cathode active material in the cathode active material layer 12. If (e.g., when) one or more suitable types (kinds) of cathode active materials are utilized, a value of specific charge capacity×mass may be calculated for each cathode active material, and the sum of the values may be the initial charge capacity of the cathode active material layer 12. The initial charge capacity of the first anode active material layer 22 may be also calculated in substantially the same manner. The initial charge capacity of the first anode active material layer 22 may be obtained by multiplying a charge specific capacity (mAh/g) of the anode active material by a mass of the anode active material in the first anode active material layer 22. If (e.g., when) one or more suitable types (kinds) of anode active materials are utilized, a value of specific charge capacity×mass may be calculated for each anode active material, and the sum of the values may be the initial charge capacity of the anode active material layer 22. The specific charge capacity of each of the cathode active material and the anode active material may be measured by utilizing a solid half-cell that uses a lithium metal as a counter electrode. The initial charge capacity of each of the cathode active material layer 12 and the first anode active material layer 22 may be directly measured at a constant current density, for example, about 0.1 mA/cm$^2$ by utilizing an all-solid half-cell. For a cathode, the measurement may be performed on an operating voltage from a 1$^{st}$ OCV up to a maximum charging voltage of, for example, about 3.0 V (vs. Li/Li$^+$). For an anode, the measurement may be performed on an operating voltage from a 2$^{nd}$ OCV up to about 0.01 V for the anode, for example, a lithium metal. For example, a solid half-cell including the cathode active material layer 12 may be charged at a constant current of 0.1 mA/cm$^2$ from a 1$^{st}$ OCV up to about 3.0 V, and a solid half-cell including the first anode active material layer 22 may be charged at a constant current of 0.1 mA/cm$^2$ from a 2$^{nd}$ OCV up to about 0.01 V. A current density during constant current charging may be, for example, about 0.2 mA/cm$^2$ or about 0.5 mA/cm$^2$. The all-solid half-cell including the cathode active material layer 12 may be charged, for example, from a 1$^{st}$ OCV up to about 2.5 V, about 2.0 V, about 3.5 V, or about 4.0 V. A maximum charging voltage of a cathode active material layer may be determined by a maximum voltage of a battery that satisfies the safety conditions according to JIS C 8712:2015 of the Japanese Standards Association.

If (e.g., when) the initial charge capacity of the first anode active material layer 22 is excessively low, the first anode active material layer 22 may become very thin, and thus, during a repeated charging/discharging process, lithium dendrites formed between the first anode active material layer 22 and the anode current collector 21 may collapse the first anode active material layer 22, which may make it difficult to improve the cycle characteristics of the all-solid secondary battery 1. If (e.g., when) the charge capacity of the first anode active material layer 22 excessively increases, the energy density of the all-solid secondary battery 1 may decrease, and the internal resistance of the all-solid secondary battery 1 due to the first anode active material layer 22 may increase, which may make it difficult to improve the cycle characteristics of the all-solid secondary battery 1.

The thickness of the first anode active material layer 22 may be, for example, 50 % or less, 40 % or less, 30 % or less, 20 % or less, 10 % or less, or 5 % or less of the thickness of the cathode active material layer 12. The thickness of the first anode active material layer 22 may be, for example, in a range of about 1 % to about 50 %, about 1 % to about 40 %, about 1 % to about 30 %, about 1 % to about 20 %, about 1 % to about 10 %, or about 1 % to about 5 % of the thickness of the cathode active material layer 12. The thickness of the first anode active material layer 22 may be, for example, in a range of about 1 μm to about 20 μm, about 2 μm to about 15 μm, or about 3 μm to about 10 μm. If (e.g., when) the first anode active material layer 22 is excessively thin, lithium dendrites formed between the first anode active material layer 22 and the anode current collector 21 may collapse the first anode active material layer 22, which may make it difficult to improve the cycle characteristics of the all-solid secondary battery 1. If (e.g., when) the thickness of the first anode active material layer 22 excessively increases, the energy density of the all-solid secondary battery 1 may decrease, and the internal resistance of the all-solid secondary battery 1 due to the first anode active material layer 22 may increase, which may make it difficult to improve the cycle characteristics of the all-solid secondary battery 1. If (e.g., when) the thickness of the first anode active material layer 22 decreases, for example, the initial charge capacity of the first anode active material layer 22 may also decrease.

**Anode: Second anode active material layer**

Referring to FIG. 5, the all-solid secondary battery 1 may further include a second anode active material layer 24 which, after charging, is provided between the anode current collector 21 and the first anode active material layer 22. The second anode active material layer 24 may be a metal layer including lithium or a lithium alloy. The metal layer may include the lithium or the lithium alloy. In some embodiments, the second anode active material layer 24 may be the metal layer including lithium and thus may serve, for example, as a lithium reservoir. Examples of the lithium alloy may include a Li-Al alloy, a Li-Sn alloy, a Li-In alloy, a Li-Ag alloy, a Li-Au alloy, a Li-Zn alloy, a Li-Ge alloy, a Li-Si alloy, and/or the like, but one or more embodiments are not limited to. Any material utilized as a lithium alloy in the art may be utilized. The second anode active material layer 24 may include (e.g., consist of) one of such alloys or lithium or may include (e.g., consist of) one or more suitable types (kinds) of alloys. The second anode active material layer 24 may be, for example, a plated layer. For example, the second anode active material layer 24 may be plated between the first anode active material layer 22 and the anode current collector 21 during a charging process of the all-solid secondary battery 1.

A thickness of the second anode active material layer 24 is not limited, but may be, for example, in a range of about 1 $\mu$m to about 500 $\mu$m, about 1 $\mu$m to about 200 $\mu$m, about 1 $\mu$m to about 150 $\mu$m, about 1 $\mu$m to about 100 $\mu$m, or about 1 $\mu$m to about 50 $\mu$m. If (e.g., when) the second anode active material layer 24 is excessively thin, it is difficult for the second anode active material layer 24 to function as a lithium reservoir. If (e.g., when) the second anode active material layer 24 is excessively thick, the mass and volume of the all-solid secondary battery 1 may increase, and the cycle characteristics of the all-solid secondary battery 1 may actually deteriorate.

In other embodiments, in the all-solid secondary battery 1, for example, before assembly of the all-solid secondary battery 1, the second anode active material layer 24 may be provided between the anode current collector 21 and the first anode active material layer 22. If e.g., when) the second anode active material layer 24 is provided between the anode current collector 21 and the first anode active material layer 22 before the assembly of the all-solid secondary battery 1, the second anode active material layer 24 may be the metal layer including lithium and thus may server as a lithium reservoir. For example, before the assembly of the all-solid secondary battery 1, lithium foil may be provided between the anode current collector 21 and the first anode active material layer 22.

If (e.g., when) the second anode active material layer 24 is plated by the all-solid secondary battery 1 being charged after being assembled, the all-solid secondary battery 1 may not include (e.g., may exclude) the second anode active material layer 24 during the assembly of the all-solid secondary battery 1, and thus the energy density of the all-solid secondary battery 1 may increase. During charging of the all-solid secondary battery 1, the first anode active material layer 22 may be charged beyond a charge capacity thereof. For example, he first anode active material layer 22 may be overcharged. At the beginning of charging, lithium may be adsorbed in the first anode active material layer 22. The anode active material included in the first anode active material layer 22 may form an alloy or compound together with lithium ions that move from the cathode 10. If (e.g., when) charging is performed beyond a capacity of the first anode active material layer 22, for example, lithium may be precipitated on a rear surface of the first anode active material layer 22, for example, between the anode current collector 21 and the first anode active material layer 22, and a metal layer corresponding to the second anode active material layer 24 may be formed by the precipitated lithium. The second anode active material layer 24 may be a metal layer mainly consisting of lithium (for example, metallic lithium). Such a result is obtained, for example, because the anode active material included in the first anode active material layer 22 includes a material that forms an alloy or compound together with lithium. During discharging, lithium in the first anode active material layer 22 and the second anode active material layer 24, for example, lithium in the metal layer, may be ionized to move toward the cathode 10. In some embodiments, in the all-solid secondary battery 1, lithium may be utilized as an anode active material. In some embodiments, the first anode active material layer 22 may cover the second anode active material layer 24, thereby serving as a protective layer for the second anode active material layer 24, for example, the metal layer, and concurrently (e.g., simultaneously) serving to suppress or reduce the precipitation growth of lithium dendrites. In some embodiments, a short circuit and a reduction in capacity of the all-solid secondary battery 1 may be suppressed or reduced, thereby improving the cycle characteristics of the all-solid secondary battery 1. In other embodiments, if (e.g., when) the second anode active material layer 24 is provided by the all-solid secondary battery 1 being charged after being assembled, the anode 20, for example, the anode current collector 21, the first anode active material layer 22, and a region therebetween, may be Li-free regions that do not include lithium (Li) in an initial state of the all-solid secondary battery 1 or in a state after full discharging thereof.

**Anode: Anode current collector**

The anode current collector 21 may include (e.g., consist of) a material that does not react with lithium, for example, a material that does not form both (e.g., simultaneously) an alloy and a compound together with lithium. Examples of a material constituting the anode current collector 21 may include copper (Cu), stainless steel, titanium (Ti), iron (Fe), cobalt (Co), and nickel (Ni), but one or more embodiments are not necessarily limited thereto. Any material utilized as an electrode current collector in the art may be utilized. The anode current collector 21 may include (e.g., consist of) one of the described metals, an alloy of two or more metals, or a coating material. The anode current collector 21 may be, for example, in the form of a plate or foil.

Referring to FIG. 4, the all-solid secondary battery 1 may further include a thin film 23, which includes an element capable of forming an alloy together with lithium, on one surface of the anode current collector 21. The thin film 23 may be provided between the anode current collector 21 and the first anode active material layer 22. The thin film 23 may include, for example, an element capable of forming an alloy together with lithium. Examples of the element capable of forming an alloy together with lithium may include gold, silver, zinc, tin, indium, silicon, aluminum, bismuth, and/or the like, but one or more embodiments are not necessarily limited thereto. Any material capable of forming an alloy together with lithium in the art may be utilized. The thin film 23 may include (e.g., consist of) one of such metals or an alloy of one or more suitable types (kinds) of metals. The thin film 23 may be provided on one surface of the anode current collector 21 so that, for example, a plated form of the second anode active material layer 24 plated between the thin film 23 and the first anode active material layer 22 may be further planarized, and the cycle characteristics of the all-solid secondary battery 1 may be further improved.

A thickness of the thin film 23 may be, for example, in a range of about 1 nm to about 800 nm, about 10 nm to about 700 nm, about 50 nm to about 600 nm, or about 100 nm to about 500 nm. If (e.g., when) the thickness of the thin film 23 is less than 1 nm, it may be difficult for the thin film 23 to function. If (e.g., when) the film 23 is excessively thick, the thin film 23 itself may adsorb lithium, and thus an amount of lithium precipitated at the anode 20 may decrease, resulting in a decrease in energy density of the all-solid secondary battery 1 and a decrease in cycle characteristics of the all-solid secondary battery 1. The thin film 23 may be provided on the anode current collector 21 through, for example, vacuum deposition, sputtering, plating, and/or the like, but one or more embodiments are not necessarily limited to such a method. Any method capable of forming the thin film 23 in the art may be utilized.

In one or more embodiments, the anode current collector 21 may include, for example, a base film and a metal layer provided on at least one surface (e.g., one surface or two surfaces) of of the base film. The base film may include, for example, a polymer. The polymer may be, for example, a thermoplastic polymer. The polymer may include, for example, polyethylene terephthalate (PET), PE, polypropylene (PP), polybutylene terephthalate (PBT), polyimide (PI), or a combination thereof. The polymer may be an insulating polymer. The base film may include an insulating thermoplastic polymer, and thus if (e.g., when) a short circuit occurs, the base film may soften or liquefy to interrupt the operation of a battery, thereby suppressing a rapid increase in current. The metal layer may include, for example, copper (Cu), stainless steel, titanium (Ti), iron (Fe), cobalt (Co), nickel (Ni), and/or an alloy thereof. The anode current collector 21 may additionally include a metal chip and/or a lead tab. The base film, metal layer, metal chip, and lead tab of the anode current collector 21 may be defined as for the described cathode current collector 11. The anode current collector 21 may have such a structure, and thus a weight of the anode 20 may be reduced, thereby improving the energy density of the anode 20 and a lithium battery.

**Electrolyte layer**

**Electrolyte layer: Electrolyte**

Referring to FIGS. 3 to 7, the electrolyte layer 30 may include an electrolyte provided between the cathode 10 and the anode 20. The electrolyte may include, for example, a solid electrolyte, a gel electrolyte, or a combination thereof.

The solid electrolyte may include, for example, a sulfide-based solid electrolyte, an oxide-based solid electrolyte, a polymer solid electrolyte, or a combination thereof.

The solid electrolyte may be, for example, a sulfide-based solid electrolyte. The sulfide-based solid electrolyte may include, for example, at least one selected from among $Li_2S-P_2S_5$, $Li_2S-P_2S_5-LiX$, wherein X is a halogen element, $Li_2S-P_2S_5-Li_2O$, $Li_2S-P_2S_5-Li_2O-LiI$, $Li_2S-SiS_2$, $Li_2S-SiS_2-LiI$, $Li_2S-SiS_2-LiBr$, $Li_2S-SiS_2-LiCl$, $Li_2S-SiS_2-B_2S_3-LiI$, $Li_2S-SiS_2-P_2S_5-LiI$, $Li_2S-B_2S_3$, $Li_2S-P_2S_5-Z_mS_n$, wherein m and n are each a positive number and Z is one of Ge, Zn, and Ga, $Li_2S-GeS_2$, $Li_2S-SiS_2-Li_3PO_4$, $Li_2S-SiS_2-Li_pMO_q$, wherein p and q are each a positive number and M is one of P, Si, Ge, B, Al, Ga, and In, $Li_{7-x}PS_{6-x}Cl_x$, (wherein $0 \leq x \leq 2$), $Li_{7-x}PS_{6-x}Br_x$, (wherein $0 \leq x \leq 2$), and $Li_{7-x}PS_{6-x}I_x$, (wherein $0 \leq x \leq 2$). For example, the sulfide-based solid electrolyte may be prepared by treating a starting material such as $Li_2S$ or $P_2S_5$ through melt quenching or mechanical milling. For example, after such treating, heat treatment may be performed. The solid electrolyte may be in an amorphous state, a crystalline state, or a mixture state thereof. In some embodiments, the solid electrolyte may be, for example, a material that includes at least one of sulfur (S), phosphorus (P), and/or lithium (Li) as constituent elements among the described materials of the sulfide-based solid electrolyte. For example, the solid electrolyte may be a material including $Li_2S-P_2S_5$. If (e.g., when) a material including $Li_2S-P_2S_5$ is utilized as a sulfide-based solid electrolyte material for forming the solid electrolyte, a mixing molar ratio of $Li_2S$ to $P_2S_5$, for example, $Li_2S:P_2S_5$, may be in a range of about 20:80 to about 90:10, about 25:75 to about 90:10, about 30:70 to about 70:30, or about 40:60 to about 60:40.

The sulfide-based solid electrolyte may include, for example, an argyrodite-type or kind solid electrolyte represented by Formula 1:

$$\text{Formula 1} \qquad Li^+{}_{12-n-x}A^{n+}X^{2-}{}_{6-x}Y^-{}_x$$

In Formula 1, A may be P, As, Ge, Ga, Sb, Si, Sn, Al, In, Ti, V, Nb, or Ta, X may be S, Se, or Te, Y may be Cl, Br, I, F, CN, OCN, SCN, or $N_3$, $1 \leq n \leq 5$, and $0 \leq x \leq 2$. The sulfide-based solid electrolyte may be, for example, an argyrodite-type or kind compound including at least one selected from among $Li_{7-x}PS_{6-x}Cl_x$, wherein $0 \leq x \leq 2$, $Li_{7-x}PS_{6-x}Br_x$, wherein $0 \leq x \leq 2$, and $Li_{7-x}PS_{6-x}I_x$, wherein $0 \leq x \leq 2$. The sulfide-based solid electrolyte may be, for example, an argyrodite-type or kind compound including at least one selected from among $Li_6PS_5Cl$, $Li_6PS_5Br$, and $Li_6PS_5I$.

The argyrodite-type or kind solid electrolyte may have a density of about 1.5 g/cc to about 2.0 g/cc. The argyrodite-type or kind solid electrolyte may have a density of 1.5 g/cc or more so that the internal resistance of an all-solid secondary battery may be reduced, and Li may be effectively suppressed or reduced from penetrating an electrolyte layer.

The oxide-based solid electrolyte may include, for example, $Li_{1+x+y}Al_xTi_{2-x}Si_yP_{3-y}O_{12}$, wherein $0<x<2$ and $0 \leq y<3$, $BaTiO_3$, $Pb(Zr,Ti)Os$ (PZT), $Pb_{1-x}La_xZr1_{-y}Ti_yO_3$ (PLZT), wherein $0 \leq x<1$ and $0 \leq y<1$, $PB(Mg_3Nb_{2/3})O_3$-$PbTiO_3$ (PMN-PT), $HfO_2$, $SrTiOs$, $SnO_2$, $CeO_2$, $Na_2O$, $MgO$, $NiO$, $CaO$, $BaO$, $ZnO$, $ZrO_2$, $Y_2O_3$, $Al_2O_3$, $TiO_2$, $SiO_2$, $Li_3PO_4$, $Li_xTi_y(PO_4)_3$, wherein $0<x<2$ and $0<y<3$, $Li_xAl_yTi_z(PO_4)_3$, wherein $0<x<2$, $0<y<1$, and $0<z<3$, $Li_{1+x+y}(Al, Ga)_x(Ti, Ge)_{2-x}Si_yP_{3-y}O_{12}$, wherein $0 \leq x \leq 1$ and $0 \leq y \leq 1$, $Li_xLa_yTiO_3$, wherein $0<x<2$ and $0<y<3$, $Li_2O$, $LiOH$, $Li_2CO_3$, $LiAlO_2$, $Li_2O$-$Al_2O_3$-$SiO_2$-$P_2O_5$-$TiO_2$-$GeO_2$, $Li_{3+x}La_3M_2O_{12}$, wherein M=Te, Nb, or Zr and $0 \leq x \leq 10$, or a combination thereof. The oxide-based solid electrolyte may be prepared, for example, through sintering and/or the like.

The oxide-based solid electrolyte may be, for example, a garnet-type or kind solid electrode selected from $Li_7La_3Zr_2O_{12}$ (LLZO) and $Li_{3+x}La_3Zr_{2-a}M_aO_{12}$ (LLZO doped with M), wherein M=Ga, W, Nb, Ta, or Al, $0<a<2$, and $0 \leq x \leq 10$.

For example, the polymer solid electrolyte may include a mixture of a lithium salt and a polymer or may include a polymer having an ion-conductive functional group. The polymer solid electrolyte may be, for example, a polymer electrolyte that is in a solid state at a temperature of about 25 °C at a pressure of about 1 atm. The polymer solid electrolyte may not include (e.g., may exclude), for example, a liquid. The polymer solid electrolyte may include a polymer, and the polymer may include, for example, polyethylene oxide (PEO), PVDF, vinylidene fluoride-hexafluoropropylene (PVDF-HFP), a poly(styrene-b-ethylene oxide) block or reduce copolymer (PS-PEO), poly(styrene-butadiene), poly(styrene-isoprene-styrene), a poly(styrene-b-divinylbenzene) block or reduce copolymer, a poly(styrene-ethylene oxide-styrene) block or reduce copolymer, polystyrene sulfonate (PSS), polyvinyl fluoride (PVF), poly(methylmethacrylate) (PMMA), polyethylene glycol (PEG), polyacrylonitrile (PAN), polytetrafluoroelene (PTFE), polyethylenedioxythiophene (PEDOT), polypyrrole (PPY), polyacrylonitrile (PAN), polyaniline, poly acetylene, NAFION™ AQUIVION®, FLEMION®, GORE™, ACIPLEX™, MORGANE®-ADP, sulfonated poly(ether ether ketone) (SPEEK), sulfonated poly(arylene ether ketone ketone sulfone) (SPAEKKS), sulfonated poly(aryl ether ketone (SPAEK), poly[bis(benzimidazobenzisoquinolinones)] (SPBIBI), poly(styrene sulfonate) (PSS), lithium 9,10-diphenylanthracene-2-sulfonate (DPASLi$^+$), or a combination thereof, but one or more embodiments are not limited thereto. Any material utilized in a polymer electrolyte in the art may be utilized. As the lithium salt, any material may be utilized as long as the material is usable as a lithium salt in the art. The lithium salt may include, for example, $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiAlO_2$, $LiAlCl_4$, $LiN(C_xF_{2x+1}SO_2)(C_yF_{2y+1}SO_2)$, wherein x and y are each a natural number from 1 to 20, LiCl, LiI, or a mixture thereof. A polymer included in the polymer solid electrolyte may be, for example, a compound including 10 or more, 20 or more, 50 or more, or 100 or more repeating units. A weight average molecular weight of the polymer included in the polymer solid electrolyte may be, for example, 1,000 Dalton or more, 10,000 Dalton or more, 100,000 Dalton or more, or 1,000,000 Dalton or more.

The gel electrolyte may be, for example, a polymer gel electrolyte. The gel electrolyte may have a gel state without including, for example, a polymer.

The polymer gel electrolyte may include, for example, a liquid electrolyte and a polymer or may include an organic solvent and a polymer having an ion-conductive functional group. The polymer gel electrolyte may be, for example, a polymer electrolyte that is in a gel state at a temperature of about 25 °C at a pressure of about 1 atm. The polymer gel electrolyte may have, for example, a gel state without including a liquid. The liquid electrolyte utilized in the polymer gel electrolyte may include, for example, a mixture of an ionic liquid, a lithium salt, and an organic solvent, a mixture of a lithium salt and an organic solvent, a mixture of an ionic liquid and an organic solvent, or a mixture of a lithium salt and an ionic liquid. The polymer utilized in the polymer gel electrolyte may be selected from polymers utilized in a solid polymer electrolyte. The organic solvent may be selected from organic solvents utilized in a liquid electrolyte. The lithium salt may be selected from lithium salts utilized in a polymer solid electrolyte. The ionic liquid may refer to a salt in a liquid state at room temperature or a room-temperature molten salt that has a melting point at room temperature or less and includes (e.g., consists of) only ions. The ionic liquid may include, for example, a compound including a) one cation selected from among an ammonium-based cation, a pyrrolidinium-based cation, pyridinium-based cation, a pyrimidinium-based cation, an imidazolium-based cation, a piperidinium-based cation, a pyrazolium-based cation, an oxazolium-based cation, a pyridazinium-base cation, a phosphonium-based cation, a sulfonium-based cation, a triazole-based cation, and a mixture thereof, and b) at least one anion selected from among $BF_4^-$, $PF_6^-$, $AsF_6^-$, $SbF_6^-$, $AlCl_4^-$, $HSO_4^-$, $ClO_4^-$, $CH_3SO_3^-$, $CF_3CO_2^-$, Cl-, Br-, I-, $BF_4^-$, $SO_4^-$, $CF_3SO_3^-$, $(FSO_2)_2N^-$, $(C_2F_5SO_2)_2N^-$, $(C_2F_5SO_2)(CF_3SO_2)N^-$, and $(CF_3SO_2)_2N^-$. The polymer solid electrolyte may be impregnated, for example, in a liquid electrolyte in a secondary battery to form a polymer gel electrolyte. The polymer gel electrolyte may further include inorganic particles. The polymer included in the polymer gel electrolyte may be, for example, a compound including 10 or more, 20 or more, 50 or more, or 100 or more repeating units. A weight average molecular weight of the polymer included in the polymer gel electrolyte may be, for example, 500 Dalton or more, 1,000 Dalton or more, 10,000 Dalton or more, 100,000 Dalton or more, or 1,000,000 Dalton or more.

**Electrolyte layer: Binder**

The electrolyte layer 30 may include, for example, a binder. The binder included in the electrolyte layer 30 may include, for example, SBR, polytetrafluoroethylene, PVDF, PE, and/or the like, but one or more embodiments are not limited thereto. Any material utilized as a binder in the art may be utilized. The binder of the electrolyte layer 30 may be the same as or different from the binder included in the cathode active material layer 12 and the first anode active material layer 22. The binder may not be provided.

The content (e.g., amount) of the binder included in the electrolyte layer 30 may be in a range of about 0.1 wt% to about 10 wt%, about 0.1 wt% to about 5 wt%, about 0.1 wt% to about 3 wt%, about 0.1 wt% to about 1 wt%, about 0 wt% to about 0.5 wt%, or about 0 wt% to about 0.1 wt% with respect to the total weight of the electrolyte layer 30.

Terms such as "substantially," "about," and "approximately" are used as relative terms and not as terms of degree, and are intended to account for the inherent deviations in measured or calculated values that would be recognized by those of ordinary skill in the art. They may be inclusive of the stated value and an acceptable range of deviation as determined by one of ordinary skill in the art, considering the limitations and error associated with measurement of that quantity. For example, "about" may refer to one or more standard deviations, or $\pm$ 30%, 20%, 10%, 5% of the stated value.

Numerical ranges disclosed herein include and are intended to disclose all subsumed sub-ranges of the same numerical precision. For example, a range of "1.0 to 10.0" includes all subranges having a minimum value equal to or greater than 1.0 and a maximum value equal to or less than 10.0, such as, for example, 2.4 to 7.6. Applicant therefore reserves the right to amend this specification, including the claims, to expressly recite any sub-range subsumed within the ranges expressly recited herein.

The present present disclosure will be described in more detail through the following Examples and Comparative Examples. However, Examples are for illustrative purposes only, and the scope of the present disclosure is not limited by Examples.

**EXAMPLES**

**Preparation of composite cathode active material**

**Example 1: Li$_2$S-LiI-CNF, two stages, 10 hr, 600 rpm, 28 G**

**First stage**

Li$_2$S and LiI were mixed at a weight ratio of 30:20. The obtained mixture was mechanically milled by utilizing a ball mill to prepare a Li$_2$S-LiI composite. Milling conditions included a temperature of 25 °C, a speed of 600 rpm, and 10 hours. Milling energy applied to a sample during milling was 28 G.

**Second stage**

The Li$_2$S-LiI composite and carbon nanofibers (CNFs) were mixed at a weight ratio of 50:10. The obtained mixture was mechanically milled by utilizing a ball mill to prepare a Li$_2$S-LiI-CNF composite. Milling conditions included a temperature of 25 °C, a speed of 600 rpm, and 10 hours. Milling energy applied to a sample during milling was 28 G. The Li$_2$S-LiI-CNF composite was utilized as a composite cathode active material.

A Mohs hardness of Li$_2$S was 0.6, a Mohs hardness of LiI was 2.0, and a Mohs hardness of the CNFs was 1.5.

**Example 2: Li$_2$S-LiI-CNF, two stages, 8 hr, 600 rpm, 28 G**

A Li$_2$S-LiI-CNF composite was prepared in substantially the same manner as in Example 1, except that a milling time in first and second stages was changed to 8 hours.

**Example 3: Li$_2$S-LiI-CNF, two stages, 6 hr, 600 rpm, 28 G**

A Li$_2$S-LiI-CNF composite was prepared in substantially the same manner as in Example 1, except that a milling time in first and second stages was changed to 6 hours.

**Example 4: Li$_2$S-LiI-CNF, two stages, 4 hr, 600 rpm, 28 G**

A Li$_2$S-LiI-CNF composite was prepared in substantially the same manner as in Example 1, except that a milling time in first and second stages was changed to 4 hours.

**Comparative Example 1: Li$_2$S-LiI-CNF, two stages, 1 hr, 600 rpm, 28 G**

A Li$_2$S-LiI-CNF composite was prepared in substantially the same manner as in Example 1, except that a milling time in first and second stages was changed to 1 hour.

**Comparative Example 2: Li$_2$S-LiI-CNF, two stages, 20 hr, 600 rpm, 28 G**

A Li$_2$S-LiI-CNF composite was prepared in substantially the same manner as in Example 1, except that a milling time in first and second stages was changed to 20 hours.

**Comparative Example 3: Li$_2$S-LiI-CNF, 510 rpm, 10 hr, two stages, 20 G**

**First stage**

Li$_2$S and LiI were mixed at a weight ratio of 30:20 to prepare a first mixture. The first mixture was mechanically milled by utilizing a ball mill to prepare a Li$_2$S-LiI composite.
Milling conditions included a temperature of 25 °C, a speed of 510 rpm, and 10 hours. Milling energy applied to a sample during milling was 20 G.

**Second stage**

The Li$_2$S-LiI composite and CNFs were mixed at a weight ratio of 50:10 to prepare a second mixture. The second mixture was mechanically milled by utilizing a ball mill to prepare a Li$_2$S-LiI-CNF composite.
Milling conditions included a temperature of 25 °C, a speed of 510 rpm, and 10 hours. Milling energy applied to a sample during milling was 20 G. The Li$_2$S-LiI-CNF composite was utilized as a composite cathode active material.

**Comparative Example 4: Li$_2$S-LiI-CNF, 300 rpm, 10 hr, two stages, 7 G**

A Li$_2$S-LiI-CNF composite was prepared in substantially the same manner as in Example 1, except that a rotational speed was reduced in first and second stages to change milling energy to 7 G.

**Comparative Example 5: Li$_2$S-LiI-CNF, 700 rpm, 10 hr, two stages, 38 G**

A Li$_2$S-LiI-CNF composite was prepared in substantially the same manner as in Example 1, except that a rotational speed was increased in first and second stages to change milling energy to 38 G.

**Comparative Example 6: Simple mixture of Li$_2$S and CNFs**

Li$_2$S and CNFs were mixed at a weight ratio of 30:30. The obtained mixture was utilized as a cathode active material without any change.

**Comparative Example 7: Li2S-CNF, 600 rpm, 2 hr, one stage, 28 G**

Li$_2$S and CNF were mixed at a weight ratio of 30:30. The obtained mixture was mechanically milled by utilizing a ball mill to prepare a Li$_2$S-CNF composite. Milling conditions included a temperature of 25 °C, a speed of 600 rpm, and 2 hours. Milling energy applied to a sample during milling was 28 G. The Li$_2$S-CNF composite was utilized as a composite cathode active material.

**Comparative Example 8: Li$_2$S-CNF, 600 rpm, 10 hr, one stage, 28 G**

A Li$_2$S-CNF composite was prepared in substantially the same manner as in Comparative Example 7, except that a milling time was changed to 10 hours.

**Comparative Example 9: Li2S-CNF-LiI, 600 rpm, 10 hr, two stages, 28 G**

**First stage**

$Li_2S$ and CNFs were mixed at a weight ratio of 30:10. The obtained mixture was mechanically milled by utilizing a ball mill to prepare a $Li_2S$-CNF composite. Milling conditions included a temperature of 25 °C, a speed of 600 rpm, and 10 hours. Milling energy applied to a sample during milling was 28 G.

**Second stage**

The $Li_2S$-CNF composite and LiI were mixed at a weight ratio of 40:20. The obtained mixture was mechanically milled by utilizing a ball mill to prepare a $Li_2S$-CNF-LiI composite. Milling conditions included a temperature of 25 °C, a speed of 600 rpm, and 10 hours. Milling energy applied to a sample during milling was 28 G. The $Li_2S$-CNF-LiI composite was utilized as a composite cathode active material.

**Comparative Example 10: Li2S-SE-CNF, 600 rpm, 10 hr, two stages, 28 G**

**First stage**

$Li_2S$ and a $Li_6PS_5Cl$ solid electrolyte (SE) were mixed at a weight ratio of 30:20. The obtained mixture was mechanically milled by utilizing a ball mill to prepare a $Li_2S$-SE composite. Milling conditions included a temperature of 25 °C, a speed of 600 rpm, and 10 hours. Milling energy applied to a sample during milling was 28 G.

**Second stage**

The $Li_2S$-SE composite and CNFs were mixed at a weight ratio of 50:10. The obtained mixture was mechanically milled by utilizing a ball mill to prepare a $Li_2S$-SE-CNF composite. Milling conditions included a temperature of 25 °C, a speed of 600 rpm, and 10 hours. Milling energy applied to a sample during milling was 28 G. The $Li_2S$-SE-CNF composite was utilized as a composite cathode active material.

**Comparative Example 11: $Li_2S$-LiI-CNF, 600 rpm, 2 hr, one stage, 28 G**

$Li_2S$, LiI, and CNFs were mixed at a weight ratio of 30:20:10. The obtained mixture was mechanically milled by utilizing a ball mill to prepare a $Li_2S$-LiI-CNF composite. Milling conditions included a temperature of 25 °C, a speed of 600 rpm, and 2 hours. Milling energy applied to a sample during milling was 28 G. The $Li_2S$-LiI-CNF composite was utilized as a composite cathode active material.

**Manufacturing of cathode and secondary battery**

**Example 5**

**Preparation of cathode**

The $Li_2S$-LiI-CNF composite prepared in Example 1 was prepared as a cathode active material. $Li_6PS_5Cl$ (D50=3.0 micrometer ($\mu$m), crystalline), which was an argyrodite-type or kind crystal, was prepared as a solid electrolyte. PTFE was prepared as a binder. Such materials were mixed at a weight ratio of 60:40:1.2 of composite cathode active material: solid electrolyte: binder to prepare a cathode mixture. The cathode mixture was obtained through dry mixing utilizing a ball mill.

The cathode mixture was provided on one surface of a cathode current collector consisting of aluminum foil, of which one surface was coated with carbon, and was plate-pressed at a pressure of 200 megapascal (MPa) for 10 minutes to prepare a cathode. A thickness of the cathode was about 120 $\mu$m. A thickness of a cathode active material layer was about 100 $\mu$m, and a thickness of the carbon-coated aluminum foil was about 20 $\mu$m. An area of the cathode active material layer was equal to an area of the cathode current collector.

**Preparation of anode**

Stainless steel (SUS) foil having a thickness of 10 $\mu$m was prepared as an anode current collector. As an anode active material, carbon black (CB) particles with a primary particle diameter of about 30 nm, and silver (Ag) particles with an average particle diameter of about 60 nm were prepared.

4 g of a mixed powder obtained by mixing the CB particles and the silver (Ag) particles at a weight ratio of 3:1 was put into a container, and 4 g of an N-methyl-2-pyrrolidone (NMP) solution including 7 wt% of a PVDF binder (#9300 manufactured by Kureha Corporation) was added thereto to prepare a mixed solution. While N-methyl-2-pyrrolidone (NMP) was added little by little to the prepared mixed solution, the mixed solution was stirred to prepare a slurry. The prepared slurry was applied onto a SUS sheet by utilizing a bar coater, dried in air at a temperature 80 °C for 10 minutes, and then vacuum-dried at a temperature of 40 °C for 10 hours to prepare a stack. The prepared stack was cold-roll-pressed to planarize a surface thereof, thereby preparing an anode having a first anode active material layer/anode current collector structure. A thickness of the first anode active material layer was about 15 $\mu$m. An area of the first anode active material layer was equal to an area of the anode current collector.

**Preparation of solid electrolyte layer**

A mixture was prepared by adding 1.5 parts by weight of an acrylic-based binder with respect to 98.5 parts by weight of a solid electrolyte to a $Li_6PS_5Cl$ solid electrolyte ($D_{50}$=3.0 $\mu$m, crystalline) which was an argyrodite-type or kind crystal. Octyl acetate was added to the prepared mixture and stirred to prepare a slurry. The prepared slurry was applied onto a 15 $\mu$m-thick non-woven fabric placed on a 75 $\mu$m-thick PET substrate by utilizing a bar coater and dried in air at a temperature 80 °C for 10 minutes to prepare a stack. The prepared stack was vacuum-dried at a temperature 80 °C for 2 hours to prepare a solid electrolyte layer.

**Inactive member**

A slurry obtained by mixing a pulp fiber (cellulose fiber), a glass fiber, aluminum hydroxide ($Al(OH)_3$), an acrylic-based binder, and a solvent was molded into a gasket shape, and then the solvent was removed to prepare a flame-retardant inactive member.

A weight ratio of the pulp fiber (cellulose fiber), the glass fiber, the aluminum hydroxide ($Al(OH)_3$), and the acrylic-based binder was 20:8:70:2. A thickness of the inactive member was 120 $\mu$m.

Before the prepared flame-retardant inactive member was provided on the solid electrolyte layer, vacuum heat treatment was performed at a temperature 80 °C for 5 hours to remove moisture and/or the like from the flame-retardant inactive member.

**Manufacturing of all-solid secondary battery**

Referring to FIG. 3, the solid electrolyte layer was provided on the anode such that the first anode active material layer was in contact with the solid electrolyte layer, and the cathode was provided on the solid electrolyte layer. A gasket was provided around the cathode to surround the cathode and be in contact with the solid electrolyte layer, thereby preparing a stack. A thickness of the gasket was about 120 $\mu$m. The described flame-retardant inactive member was utilized as the gasket. The gasket was provided in contact with a side surface of the cathode and the solid electrolyte layer. The cathode was provided at a central portion of the solid electrolyte layer, and the gasket was provided to surround the cathode and extend to an end portion of the solid electrolyte layer. An area of the cathode was about 90 % of an area of the solid electrolyte layer, and the gasket was provided in the remaining 10 % of the entire area of the solid electrolyte layer in which the cathode was not provided.

The prepared stack was plate-pressed at a temperature of 85 °C and a pressure of 500 MPa for 30 minutes. Through the plate pressing, the solid electrolyte layer is sintered to improve battery performance characteristics. A thickness of the sintered solid electrolyte layer was about 45 $\mu$m. A density of the $Li_6PS_5Cl$ solid electrolyte, which was an argyrodite-type or kind crystal included in the sintered solid electrolyte layer, was 1.6 gram per cubic centimeter (g/cc). The area of the solid electrolyte layer was equal to an area of the anode.

The pressed stack was put into a pouch and vacuum-sealed to manufacture an all-solid secondary battery. Portions of the cathode current collector and the anode current collector were extended to the outside of the sealed battery and utilized as a cathode terminal and an anode terminal.

**Examples 6 to 8**

Cathodes and all-solid secondary batteries were manufactured in substantially the same manner as in Example 5, except that the composite cathode active materials prepared in Examples 2 to 4 were utilized, respectively.

**Comparative Examples 12 to 22**

Cathodes and all-solid secondary batteries were manufactured in substantially the same manner as in Example 5, except that the composite cathode active materials prepared in Comparative Examples 1 to 11 were utilized, respectively.

**Evaluation Example 1: XRD analysis and SEM analysis**

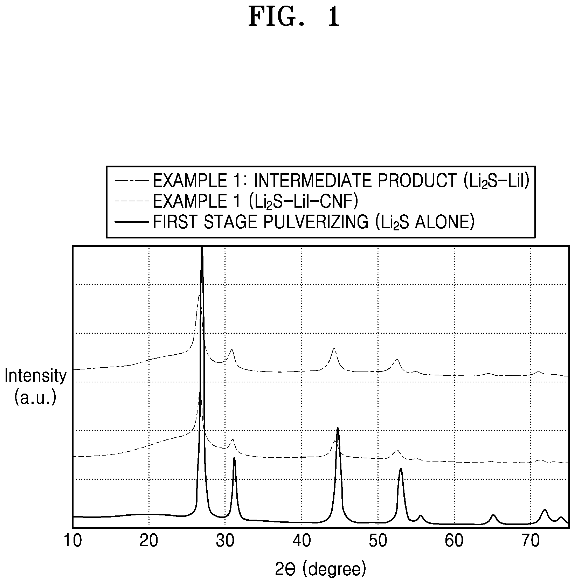

By utilizing Cu K$\alpha$ radiation, an XRD spectrum was measured on bare $Li_2S$ utilized in Example 1, pulverized $Li_2S$, the $Li_2S$-LiI composite prepared in the first stage of Example 1, and the $Li_2S$-LiI-CNF composite prepared in Example 1. Measurement results are shown in Table 1 and FIG. 1. $Li_2S$ crystallite sizes and lattice constants were derived from a first peak for a (111) crystal plane appearing at a diffraction angle 2θ of 27°±2.0° in the XRD spectrum.

The pulverized $Li_2S$ was prepared by milling under the same conditions, except that the mixture including $Li_2S$ and LiI at a weight ratio of 30:20 in the first stage of Example 1 was changed to a mixture including $Li_2S$ at 50 parts by weight. The second stage was not performed.

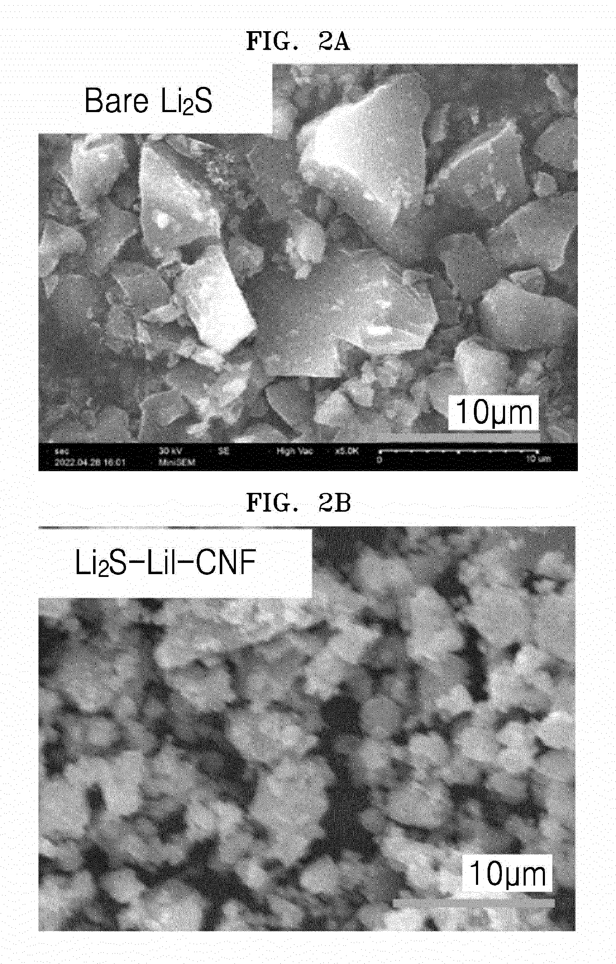

For the bare $Li_2S$ utilized in Example 1, comparisons were made to the pulverized $Li_2S$, the $Li_2S$-LiI composite prepared in the first stage of Example 1, and the $Li_2S$-LiI-CNF composite prepared in Example 1. A particle size analyzer (PSA) utilizing a scanning electron microscope (SEM) and a laser were utilized to measure $Li_2S$ crystallite particle size (for example, a D50 particle size) and $Li_2S$ particle size. Measurement results are shown in Table 1, FIG. 2A for bare $Li_2S$, and FIG. 2B for the $Li_2S$-LiI-CNF composite prepared in Example 1.

Table 1

| | Second peak position [°] | $Li_2S$ crystallite size [nm] | $Li_2S$ particle size [μm] |
|---|---|---|---|
| Bare $Li_2S$ | 27.0211 | 64.67 | 8 |
| | First peak position [°] | $Li_2S$ crystallite size [nm] | $Li_2S$ particle size [μm] |
| Pulverized $Li_2S$ | 26.9270 | 15.42 | - |
| $Li_2S$-LiI composite (first stage) | 26.6074 | 8.83 | Less than 1 |
| Example 1 $Li_2S$-LiI-CNF composite | 26.7020 | 9.86 | Less than 1 |

As shown in Table 1, a position of a first peak for a (111) crystal plane appearing at a diffraction angle 2θ of 27°±2.0° of the $Li_2S$-LiI-CNF composite of Example 1 shifted to a lower angle than a position of a second peak for a (111) crystal plane appearing at diffraction angle 2θ of 27°±2.0° of the bare $Li_2S$. A first diffraction angle of the first peak of the $Li_2S$-LiI-CNF composite of Example 1 (i.e., 26.7020°) was less than a second diffraction angle of the second peak of the bare $Li_2S$ (i.e., 27.0211°). In some embodiments, a crystallite size of the $Li_2S$-LiI-CNF composite of Example 1 (i.e., 9.86 nm, shown in FIG. 2B) was considerably reduced as compared with a crystallite size of the bare $Li_2S$ (i.e., 64.67 nm, shown in FIG. 2A).

As shown in Table 1 and FIG. 1, positions of the first peak of the $Li_2S$-LiI-CNF composite of Example 1 and the $Li_2S$-LiI composite (first stage), which was an intermediate product in the first stage of Example 1, each shifted to a lower angle than a position of a first peak of the pulverized $Li_2S$.

In some embodiments, a first lattice constant d1 derived from the first peak for the (111) crystal plane appearing at a diffraction angle 2θ of 27°±2.0° of the $Li_2S$-LiI-CNF composite of Example 1 was larger than a second lattice constant d2 derived from the second peak for the 111 crystal plane appearing at a diffraction angle 2θ of 27°±2.0° of the bare $Li_2S$. The first lattice constant d1 was 5.78 Å or more.

This was determined to be due to LiI being dissolved in a $Li_2S$ crystal to increase a lattice constant value. It was confirmed that the $Li_2S$-LiI-CNF composite formed a solid solution.

In some embodiments, the first peak of the $Li_2S$-LiI-CNF composite of Example 1 had a first FWHM (FWHM1), the second peak of the bare $Li_2S$ had a second FWHM (FWHM2), and the first FWHM greater than the second FWHM. The first FWHM (FWHM1) was 1° or more.

In some embodiments, a particle size of the composite of Example 1 was 5 μm or less.

**Evaluation Example 2: XRD analysis and SEM analysis**

By utilizing Cu K$\alpha$ radiation, an XRD spectrum was measured on the composite cathode active materials (for example, composites) prepared in Examples 1 to 4 and Comparative Examples 1 to 11. $Li_2S$ crystallite sizes calculated from a first peak for a (111) crystal plane appearing at a diffraction angle 2θ of 27°±2.0° in the measured XRD spectrum are shown in Table 2. The crystallite size was calculated by utilizing the Scherrer equation.

$Li_2S$ particle diameters of the composite cathode active materials prepared in Examples 1 to 4 and Comparative Examples 1 to 11 were measured by utilizing a SEM. The $Li_2S$ particle diameter of the composite cathode active material is an arithmetic average of particle diameters of a plurality of $Li_2S$ particles measured in a SEM image by utilizing software. Measurement results are shown in Table 2.

[Table 2]

| | First stage milling | Second stage milling | Solid solution formation | $Li_2S$ crystallite size [nm] | $Li_2S$ particle size [μm] |
|---|---|---|---|---|---|
| Example 1 (28 G, 10 hr) ($Li_2S$-LiI-CNF composite) | 600 rpm, 28 G, 10 hr | 600 rpm, 28 G, 10 hr | ○ | 9.8 | Less than 1 |
| Example 2 (28 G, 8 hr) ($Li_2S$-LiI-CNF composite) | 600 rpm, 28 G, 8 hr | 600 rpm, 28 G, 8 hr | ○ | 7.2 | Less than 1 |
| Example 3 (28 G, 6 hr) ($Li_2S$-LiI-CNF composite) | 600 rpm, 28 G, 6 hr | 600 rpm, 28 G, 6 hr | ○ | 8.2 | Less than 1 |
| Example 4 (28 G, 4 hr) ($Li_2S$-LiI-CNF composite) | 600 rpm, 28 G, 4 hr | 600 rpm, 28 G, 4 hr | ○ | 9.5 | Less than 1 |
| Comparative Example 1 (28 G, 1 hr) ($Li_2S$-LiI-CNF composite) | 600 rpm, 28 G, 1 hr | 600 rpm, 28 G, 1 hr | ○ | 20.1 | Less than 1 |
| Comparative Example 2 (28 G, 20 hr) ($Li_2S$-LiI-CNF composite) | 600 rpm, 28 G, 20 hr | 600 rpm, 28 G, 20 hr | △ | 11.8 | Less than 1 |
| Comparative Example 3 ($Li_2S$-LiI-CNF composite) | 510 rpm, 20 G, 10 hr | 510 rpm, 20 G, 10 hr | ○ | 9.9 | Less than 1 |
| Comparative Example 4 (7 G, 10 hr) ($Li_2S$-LiI-CNF composite) | 300 rpm, 7 G, 10 hr | 300 rpm, 7 G, 10 hr | × | 27.2 | 3 |
| Comparative Example 5 (38G, 10 hr) ($Li_2S$-LiI-CNF composite) | 700 rpm, 38 G, 10 hr | 700 rpm, 38 G, 10 hr | △ | 15.6 | 2 |
| Comparative Example 6 (0 G) (simple mixture of $Li_2S$+CNFs) | - | - | × | 66.67 | 8 |
| Comparative Example 7 (28 G, 1 hr) ($Li_2S$-LiI-CNF composite) | 600 rpm, 20 G, 2 hr | - | × | 24.07 | 3 |
| Comparative Example 8 (28 G, 10 hr) ($Li_2S$-CNF composite) | 600 rpm, 20 G, 10 hr | - | × | 9.89 | Less than 1 |
| Comparative Example 9 (28 G, 10 hr) ($Li_2S$-CNF-LiI composite) | 600 rpm, 28 G, 10 hr | 600 rpm, 28 G, 10 hr | × | 15.2 | 2 |
| Comparative Example 10 (28 G, 10 hr) ($Li_2S$-SE-CNF composite) | 600 rpm, 28 G, 10 hr | 600 rpm, 28 G, 10 hr | × | 8.9 | Less than 1 |
| Comparative Example 11 (28 G, 2 hr) ($Li_2S$-LiI-CNF composite) | 600 rpm, 20 G, 2 hr | - | ○ | | 3 |

In Table 2, "○" indicates a solid solution was formed. As shown in Table 2, the $Li_2S$-LiI-CNF composites of Examples 1 to 4 each included a $Li_2S$-LiI solid solution, a $Li_2S$ crystallite size was less than 9.9 nm, and a $Li_2S$ particle size of the composite was 2 μm or less.

In the $Li_2S$-LiI-CNF composite of Comparative Example 1, due to a decrease in milling energy during preparation, a $Li_2S$ crystallite size was twice as much as 9.9 nm or more (e.g., 20.1 nm).

In Table 2, "△" indicates a solid solution was not properly formed due to processing characteristics. For example, in the $Li_2S$-LiI-CNF composite of Comparative Example 2, due to an increase in milling energy during preparation, LiI was phase-separated as a separate phase, a solid solution was not formed, and a $Li_2S$ crystallite size was also increased.

Due to an excessive decrease in milling energy during preparation, the $Li_2S$-LiI-CNF composite of Comparative Example 4 did not form a $Li_2S$-LiI solid solution.

In the Li<sub>2</sub>S-LiI-CNF composite of Comparative Example 5, due to heat generation caused by an increase in milling energy during preparation, a Li<sub>2</sub>S-LiI solid solution was not properly formed.

The Li<sub>2</sub>S-LiI-CNF composite of Comparative Example 11 was prepared in the first stage to include a Li+S-LiI solid solution, but a Li<sub>2</sub>S crystallite size increased, and a Li<sub>2</sub>S particle size of the composite exceeded 2 μm.

In Table 2, "x" indicates a solid solution was not formed. For example, the simple mixture of Li<sub>2</sub>S and CNFs in Comparative Example 6, the Li<sub>2</sub>S-CNF composites in Comparative Examples 7 and 8, and the Li<sub>2</sub>S-SE-LiI composite in Comparative Example 10 did not form a solid solution.

In the Li<sub>2</sub>S-CNF-LiI composite of Comparative Example 9, a Li<sub>2</sub>S-LiI solid solution was not properly formed because the Li<sub>2</sub>S-CNF composite was prepared in the first stage and then the Li<sub>2</sub>S-CNF-LiI composite was prepared in the second stage.

**Evaluation Example 5: Charge/discharge test**

The charge/discharge characteristics of the all-solid secondary batteries of Examples 5 to 8 and Comparative Examples 12 to 22 adopting the composite cathode active materials prepared in Examples 1 to 4 and Comparative Examples 1 to 11 were evaluated through the following charge/discharge test.

The charge/discharge test was performed by putting the all-solid secondary battery into a thermostatic bath at a temperature of 45 °C.

At a first cycle, the all-solid secondary batteries were charged at a constant current of 0.1 C for 12.5 hours until a battery voltage reached 2.5 V to 2.8 V. Subsequently, the all-solid secondary batteries were discharged at a constant current of 0.1 C for 12.5 hours until the battery voltage reached 0.3 V.

A discharge capacity of the first cycle was taken as a standard capacity. The standard capacity is shown as a specific capacity of Li<sub>2</sub>S in Table 1.

From a second cycle, charging and discharging were performed up to a 150<sup>th</sup> cycle under the same conditions as the first cycle. Measurement results are shown in Table 3. Initial efficiency is represented by Equation 1.

Equation 1

initial efficiency [%] = [first cycle discharge capacity/first cycle charge capacity]×100

The number of cycles refers to the number of cycles required for discharge capacity to decrease to 80 % of the standard capacity after the second cycle. It was regarded that, as the number of cycles was increased, lifespan characteristics were improved.

[Table 3]

| | First stage milling | Second stage milling | Solid solution formation | Specific capacity [mAh/g] | Initial efficiency [%] | Number of cycles [times] |
|---|---|---|---|---|---|---|
| Example 5 (28 G, 10hr) (Li<sub>2</sub>S-LiI-CNF composite) | 600 rpm, 28 G, 10 hr | 600 rpm, 28 G, 10 hr | ○ | 952 | 91 | 100 |
| Example 6 (28 G, 8 hr) (Li<sub>2</sub>S-LiI-CNF composite) | 600 rpm, 28 G, 8 hr | 600 rpm, 28 G, 8 hr | ○ | 946 | 89 | 250 |
| Example 7 (28 G, 6 hr) (Li<sub>2</sub>S-LiI-CNF composite) | 600 rpm, 28 G, 6 hr | 600 rpm, 28 G, 6 hr | ○ | 948 | 89.8 | 200 |
| Example 8 (28 G, 4 hr) (Li<sub>2</sub>S-LiI-CNF composite) | 600 rpm, 28 G, 4 hr | 600 rpm, 28 G, 4 hr | ○ | 950 | 90 | 130 |
| Comparative Example 12 (28 G, 1 hr) (Li<sub>2</sub>S-LiI-CNF composite) | 600 rpm, 28 G, 1 hr | 600 rpm, 28 G, 1 hr | ○ | 410 | 88 | 85 |

(continued)

| | First stage milling | Second stage milling | Solid solution formation | Specific capacity [mAh/g] | Initial efficiency [%] | Number of cycles [times] |
|---|---|---|---|---|---|---|
| Comparative Example 13 (28 G, 20 hr) (Li$_2$S-LiI-CNF composite) | 600 rpm, 28 G, 20 hr | 600 rpm, 28 G, 20 hr | △ | 650 | 85.9 | 78 |
| Comparative Example 14 (Li$_2$S-LiI-CNF composite) | 510 rpm, 20 G, 10 hr | 510 rpm, 20 G, 10 hr | ○ | 895 | 88 | 92 |
| Comparative Example 15 (7 G, 10 hr) (Li$_2$S-LiI-CNF composite) | 300 rpm, 7 G, 10 hr | 300 rpm, 10 G, 7 hr | × | 310 | 85 | 50 |
| Comparative Example 16 (38 G, 10 hr) (Li$_2$S-LiI-CNF composite) | 700 rpm, 38 G, 10 hr | 700 rpm, 38 G, 10 hr | △ | 350 | 85 | 88 |
| Comparative Example 17 (0 G) (simple mixture of Li$_2$S+CNFs) | - | - | × | 30 | - | - |
| Comparative Example 18 (28 G, 2 hr) (Li$_2$S-CNF composite) | 600 rpm, 28 G, 2 hr | - | × | 258 | 90 | - |
| Comparative Example 19 (28 G, 10 hr) (Li$_2$S-CNF composite) | 600 rpm, 28 G, 10 hr | - | × | 799 | 82 | 2 |
| Comparative Example 20 (28 G, 10 hr) (Li$_2$S-CNF-LiI composite) | 600 rpm, 28 G, 10 hr | 600 rpm, 28 G, 10 hr | × | 580 | 85 | 50 |
| Comparative Example 21 (28 G, 10 hr) (Li$_2$S-SE-CNF composite) | 600 rpm, 28 G, 10 hr | 600 rpm, 28 G, 10 hr | × | 0 | - | - |
| Comparative Example 22 (28 G, 2 hr) (Li$_2$S-LiI-CNF composite) | 600 rpm, 28 G, 2 hr | - | ○ | 250 | 91 | 100 |

In Table 3, "○" indicates a solid solution was formed, "△" indicates a solid solution was not properly formed due to processing characteristics, and "x" indicates a solid solution was not formed.

As shown in Table 3, the all-solid secondary batteries of Examples 5 to 8 adopting the composite cathode active materials of Examples 1 to 4 showed improved discharge capacity, initial efficiency, and lifespan characteristics as compared with the all-solid secondary batteries of Comparative Examples 12 to 22 adopting the composite cathode active materials of Comparative Examples 1 to 11.

In the all-solid secondary battery of Comparative Example 12 adopting the composite cathode active material of Comparative Example 1 with an increased crystallite size, discharge capacity and lifespan characteristics were reduced.

Even in the all-solid secondary battery of Comparative Example 13 adopting the composite cathode active material of Comparative Example 2 which included a separate LiI phase and had an increased crystallite size, discharge capacity and lifespan characteristics were reduced. In the all-solid secondary batteries of Comparative Example 14 and Comparative Example 15 adopting the composite cathode active materials of Comparative Examples 3 and Comparative Example 4 with an increased crystallite size, discharge capacity and lifespan characteristics were reduced.

Even in the all-solid secondary battery of Comparative Example 16 adopting the composite cathode active material of Comparative Example 5 which included a separate LiI phase and had an increased crystallite size, discharge capacity and lifespan characteristics were reduced.

In the all-solid secondary batteries of Comparative Examples 17 to 21 adopting the composite cathode active materials of Comparative Examples 6 to 10, at least one of initial efficiency and lifespan characteristics was degraded.

In the all-solid secondary battery of Comparative Example 22 adopting the composite cathode active material of Comparative Example 11 prepared by performing only first stage milling, lifespan characteristics were excellent or suitable, but discharge capacity was considerably reduced.

In some embodiments, it was confirmed that a second anode active material layer was formed as a lithium metal between a first anode active material layer and an anode current collector after initial charging in the all-solid secondary batteries of Examples 5 to 8. This was confirmed through a cross-sectional SEM image of the all-solid secondary battery.

According to one aspect, there may be provided an all-solid secondary battery with increased specific capacity and improved cycle characteristics by including a composite cathode active material with a reduced crystallite size.

A battery management system (BMS) device, and/or any other relevant devices or components according to embodiments of the present disclosure described herein may be implemented utilizing any suitable hardware, firmware (e.g., an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the drawings, it will be understood by those of ordinary skill in the art that one or more suitable changes in form and details may be made therein without departing from the spirit and scope of the present disclosure as defined by the following claims and equivalents thereof.

Embodiments are set out in the following clauses:

Clause 1. A composite cathode active material comprising a composite of $M_2S$, an alkali metal salt, and a carbon-based material,

> wherein M is an alkali metal, the alkali metal is Li or Na,
> a size of an $M_2S$ crystallite obtained from an X-ray diffraction (XRD) spectrum of the composite is less than 9.9 nm, and
> the composite comprises a solid solution of the $M_2S$ and the alkali metal salt.

Clause 2. The composite cathode active material of clause 1, wherein the alkali metal salt is a lithium salt or a sodium salt, and

> the alkali metal salt is a binary compound or a ternary compound,
> wherein the binary compound comprises: LiI, LiBr, LiCl, LiF, LiH, $Li_2O$, $Li_2Se$, $Li_2Te$, $Li_3N$, LisP, $Li_3As$, $Li_3Sb$, $Li_3Al_2$, LiBs, or a combination thereof; or NaI, NaBr, NaCl, NaF, $Na_2O$, $Na_2Se$, $Na_3N$, $Na_3P$, $Na_3As$, $Na_3Sb$, $Na_3Al_2$, $NaB_3$, or a combination thereof, and
> the ternary compound comprises: $Li_3OCl$, $LiPF_6$, $LiBF_4$, $LiSbF_6$, $LiAsF_6$, $LiClO_4$, $LiAlO_2$, $LiAlCl_4$, $LiNO_3$, $Li_2CO_3$, $LiBH_4$, $Li_2SO_4$, $Li_3BO_3$, $Li_3PO_4$, $Li_4NCl$, $Li_5NCl_2$, $Li_3BN_2$, or a combination thereof; or $Na_3OCl$, $NaBF_4$, $NaPF_6$, $NaAsF_6$, $NaClO_4$, $NaNO_3$, $NaAlO_2$, $NaAlCl_4$, $NaNO_3$, $Na_2CO_3$, $NaBH_4$, $Na_2SO_4$, $Na_3BO_3$, $Na_3PO_4$, $Na_4NCl$, $Na_5NCl_2$, $Na_3BN_2$, or a combination thereof.

Clause 3. The composite cathode active material of clause 1 or clause 2, wherein a molar ratio of the $M_2S$ to the alkali metal salt in the composite is in a range of about 50:50 to about 95:5.

Clause 4. The composite cathode active material of any one of clauses 1 to 3, wherein, in the XRD spectrum of the composite, a first lattice constant (d1) derived from a first peak appearing at a diffraction angle (2θ) of about 27°±2.0° corresponding to a (111) crystal plane of the $M_2S$ is larger than a second lattice constant (d2) derived from a second peak appearing at a diffraction angle (2θ) of about 27°±2.0° corresponding to the (111) crystal plane of the $M_2S$ in an XRD spectrum of the $M_2S$ used to prepare the composite, and a size of the first lattice constant (d1) is 5.78 Å or more.

Clause 5. The composite cathode active material of any one of clauses 1 to 4, wherein the first peak has a first diffraction angle, and the second peak has a second diffraction angle, wherein the first diffraction angle is less than the second diffraction angle; or

the first peak has a first full width at half maximum (FWHM1), and the second peak has a second full width at half maximum (FWHM2), wherein the first full width at half maximum FWHM1 is greater than the second full width at half maximum FWHM2 and is 1° or more.

Clause 6. The composite cathode active material of any one of clauses 1 to 5, wherein a Mohs hardness of each of the alkali metal salt and the carbon-based material is greater than that of the $M_2S$, and

the alkali metal salt and the carbon-based material each have a Mohs hardness of 0.7 or more.

Clause 7. The composite cathode active material of any one of clauses 1 to 6, wherein a particle size of the composite is 10 $\mu$m or less.

Clause 8. The composite cathode active material of any one of clauses 1 to 7, wherein the carbon-based material comprises a fibrous carbon-based material,

wherein the fibrous carbon-based material comprises carbon nanostructures, the carbon nanostructures comprise carbon nanofibers, carbon nanotubes, carbon nanobelts, carbon nanorods, or a combination thereof, and

a content of the carbon-based material is in a range of about 1 wt% to about 20 wt% of a total weight of the composite.

Clause 9. The composite cathode active material of any one of clauses 1 to 8, wherein, with respect to about 100 parts by weight of the composite, the composite comprises the $M_2S$ in a range of about 10 parts by weight to about 80 parts by weight, the alkali metal salt in a range of about 1 part by weight to about 40 parts by weight, and the carbon-based material in a range of about 1 part by weight to about 20 parts by weight.

Clause 10. A cathode comprising:

a cathode current collector; and
a cathode active material layer disposed on one surface or two surfaces of the cathode current collector, wherein the cathode active material layer comprises the composite cathode active material of any one of clauses 1 to 9 and a solid electrolyte.

Clause 11. The cathode of clause 10, wherein, with respect to 100 parts by weight of the cathode active material layer, the cathode active material layer comprises the composite cathode active material in a range of about 40 parts by weight to about 90 parts by weight and a sulfide-based solid electrolyte in a range of about 10 parts by weight to about 60 parts by weight,

wherein the composite cathode active material comprises a carbon-based material, and the carbon-based material is disposed only in the composite cathode active material in the cathode active material layer.

Clause 12. An all-solid secondary battery comprising:

the cathode of clause 10;
an anode; and
an electrolyte layer disposed between the cathode and the anode,
wherein the anode comprises an anode current collector and a first anode active material layer disposed on one surface of the anode current collector.

Clause 13. The all-solid secondary battery of clause 12, wherein the first anode active material layer comprises an anode active material and a binder,
wherein the anode active material has a particle form and an average particle diameter of 4 $\mu$m or less.

Clause 14. The all-solid secondary battery of any one of clause 12 or clause 13, wherein the anode active material comprises at least one selected from a carbon-based anode active material and a metal or metalloid anode active material,

wherein the carbon-based anode active material comprises amorphous carbon, crystalline carbon, porous carbon, or a combination thereof, and

the metal or metalloid anode active material comprises gold (Au), platinum (Pt), palladium (Pd), silicon (Si), silver (Ag), aluminum (Al), bismuth (Bi), tin (Sn), zinc (Zn), or a combination thereof.

Clause 15. The all-solid secondary battery of any one of clauses 12 to 14, wherein the anode active material comprises a mixture of first particles consisting of amorphous carbon and second particles consisting of metal or metalloid, wherein a content of the second particles is in a range of about 1 wt% to about 60 wt% with respect to a total weight of the mixture.

Clause 16. The all-solid secondary battery of any one of clauses 12 to 15, further comprising a second anode active material layer disposed between the anode current collector and the first anode active material layer and/or between the anode current collector and the electrolyte layer, wherein the second anode active material layer is a metal layer, and the metal layer comprises lithium or a lithium alloy.

Clause 17. The all-solid secondary battery of any one of clauses 12 to 16, wherein the electrolyte layer comprises a solid electrolyte, a gel electrolyte, or a combination thereof,

wherein the solid electrolyte comprises a sulfide-based solid electrolyte, an oxide-based solid electrolyte, a polymer solid electrolyte, or a combination thereof, and

the gel electrolyte comprises a polymer gel electrolyte.

Clause 18. The all-solid secondary battery of any one of clauses 12 to 17, wherein the sulfide-based solid electrolyte comprises at least one selected from $Li_2S-P_2S_5$, $Li_2S-P_2S_5-LiX$, wherein X is a halogen element, $Li_2S-P_2S_5-Li_2O$, $Li_2S-P_2S_5-Li_2O-LiI$, $Li_2S-SiS_2$, $Li_2S-SiS_2-LiI$, $Li_2S-SiS_2-LiBr$, $Li_2S-SiS_2-LiCl$, $Li_2S-SiS_2-B_2S_3-LiI$, $Li_2S-SiS_2-P_2S_5-LiI$, $Li_2S-B_2S_3$, $Li_2S-P_2S_5-Z_mS_n$, wherein m and n are each a positive number and Z is one of Ge, Zn, and Ga, $Li_2S-GeS_2$, $Li_2S-SiS_2-Li_3PO_4$, $Li_2S-SiS_2-Li_pMO_q$, wherein p and q are each a positive number and M is one of P, Si, Ge, B, Al, Ga, and In, $Li_{7-x}PS_{6-x}Cl_x$, wherein 0<x<2, $Li_{7-x}PS_{6-x}Br_x$, wherein 0<x<2, and $Li_{7-x}PS_{6-x}I_x$, wherein 0≤x≤2, and comprises an argyrodite-type solid electrolyte,

wherein the argyrodite-type solid electrolyte comprises at least one selected from $Li_6PS_5Cl$, $Li_6PS_5Br$, and $Li_6PS_5I$, and has a density of about 1.5 g/cc to about 2.0 g/cc.

Clause 19. The all-solid secondary battery of any one of clauses 12 to 18, wherein the cathode comprises a cathode current collector, and

at least one of the cathode current collector and the anode current collector comprises a base film and a metal layer disposed on one surface or two surfaces of the base film,

wherein the base film comprises a polymer, the polymer comprising polyethylene terephthalate (PET), polyethylene (PE), polypropylene (PP), polybutylene terephthalate (PBT), polyimide (PI), or a combination thereof, and

the metal layer comprises indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

Clause 20. The all-solid secondary battery of any one of clauses 12 to 19, further comprising an inactive member disposed on one side surface of the cathode.

## Claims

1. A composite cathode active material comprising:

a composite of $M_2S$;
an alkali metal salt; and
a carbon-based material,
wherein M is an alkali metal, the alkali metal is Li or Na,
a size of an $M_2S$ crystallite obtained from an X-ray diffraction (XRD) spectrum of the composite is less than 9.9 nm, and
the composite comprises a solid solution of the $M_2S$ and the alkali metal salt.

2. The composite cathode active material as claimed in claim 1, wherein the alkali metal salt is a lithium salt or a sodium salt, and

   the alkali metal salt is a binary compound or a ternary compound, and
   wherein the binary compound comprises: LiI, LiBr, LiCl, LiF, LiH, $Li_2O$, $Li_2Se$, $Li_2Te$, $Li_3N$, $Li_3P$, $Li_3As$, $Li_3Sb$, $Li_3Al_2$, $LiB_3$, or a combination thereof; or NaI, NaBr, NaCl, NaF, $Na_2O$, $Na_2Se$, $Na_3N$, $Na_3P$, $Na_3As$, $Na_3Sb$, $Na_3Al_2$, $NaB_3$, or a combination thereof, and
   the ternary compound comprises: $LisOCl$, $LiPF_6$, $LiBF_4$, $LiSbF_6$, $LiAsF_6$, $LiClO_4$, $LiAlO_2$, $LiAlCl_4$, $LiNO_3$, $Li_2CO_3$, $LiBH_4$, $Li_2SO_4$, $Li_3BO_3$, $Li_3PO_4$, $Li_4NCl$, $Li_5NCl_2$, $Li_3BN_2$, or a combination thereof; or $Na_3OCl$, $NaBF_4$, $NaPF_6$, $NaAsF_6$, $NaClO_4$, $NaNO_3$, $NaAlO_2$, $NaAlCl_4$, $NaNO_3$, $Na_2CO_3$, $NaBH_4$, $Na_2SO_4$, $Na_3BO_3$, $Na_3PO_4$, $Na_4NCl$, $Na_5NCl_2$, $Na_3BN_2$, or a combination thereof.

3. The composite cathode active material as claimed in claim 1 or 2, wherein a molar ratio of the $M_2S$ to the alkali metal salt in the composite is about 50:50 to about 95:5.

4. The composite cathode active material as claimed in claims 1 to 3, wherein, in the XRD spectrum of the composite, a first lattice constant (d1) derived from a first peak appearing at a diffraction angle (2θ) of about 27°±2.0° corresponding to a (111) crystal plane of the $M_2S$ is larger than a second lattice constant (d2) derived from a second peak appearing at a diffraction angle (2θ) of about 27°±2.0° corresponding to the (111) crystal plane of the $M_2S$ in an XRD spectrum of the $M_2S$ used to prepare the composite, and
   a size of the first lattice constant (d1) is 5.78 Å or more.

5. The composite cathode active material as claimed in claim 4, wherein:

   the first peak has a first diffraction angle and the second peak has a second diffraction angle, the first diffraction angle being less than the second diffraction angle; or
   the first peak has a first full width at half maximum (FWHM1) and the second peak has a second full width at half maximum (FWHM2), the first full width at half maximum FWHM1 being greater than the second full width at half maximum FWHM2 and is 1° or more.

6. The composite cathode active material as claimed in claims 1 to 5,

   wherein a Mohs hardness of each of the alkali metal salt and the carbon-based material is greater than that of the $M_2S$, and
   the alkali metal salt and the carbon-based material each have a Mohs hardness of 0.7 or more; and/or
   wherein the composite is in a form of particles, and a particle size of particles of the composite is 10 micrometer (μm) or less.

7. The composite cathode active material as claimed in claims 1 to 6, wherein the carbon-based material comprises a fibrous carbon-based material,

   wherein the fibrous carbon-based material comprises carbon nanostructures, the carbon nanostructures comprise carbon nanofibers, carbon nanotubes, carbon nanobelts, carbon nanorods, or a combination thereof, and
   an amount of the carbon-based material is about 1 wt% to about 20 wt% of a total weight of the composite.

8. The composite cathode active material as claimed in claims 1 to 7, wherein, with respect to about 100 parts by weight of the composite, the composite comprises about 10 parts by weight to about 80 parts by weight of the $M_2S$, about 1 part by weight to about 40 parts by weight of the alkali metal salt, and about 1 part by weight to about 20 parts by weight of the carbon-based material.

9. A cathode (10) comprising:

   a cathode current collector (11); and
   a cathode active material layer (12) on at least one surface of the cathode current collector (11),
   wherein the cathode active material layer (12) comprises the composite cathode active material as claimed in claim 1 and a solid electrolyte; preferably first peak wherein, with respect to 100 parts by weight of the cathode active material layer (12), the cathode active material layer (12) comprises about 40 parts by weight to about 90 parts by weight of the composite cathode active material and about 10 parts by weight to about 60 parts by weight of a sulfide-based solid electrolyte, and

wherein the composite cathode active material comprises a carbon-based material, and the carbon-based material is only in the composite cathode active material in the cathode active material layer (12).

10. An all-solid secondary battery (1) comprising:

the cathode (10) as claimed in claim 9;
an anode (20); and
an electrolyte layer (30) between the cathode (10) and the anode (20),
wherein the anode (20) comprises an anode current collector (21) and a first anode active material layer (22) on one surface of the anode current collector (21);
preferably

- wherein the first anode active material layer (22) comprises an anode active material and a binder,

wherein the anode active material is in a form of particles and an average particle diameter of the particles of the anode active material is 4 $\mu$m or less;
and/or

- wherein the first anode active material layer (22) comprises at least one selected from among a carbon-based anode active material and a metal and/or metalloid anode active material,

wherein the carbon-based anode active material comprises amorphous carbon, crystalline carbon, porous carbon, or a combination thereof, and
the metal and/or metalloid anode active material comprises gold (Au), platinum (Pt), palladium (Pd), silicon (Si), silver (Ag), aluminum (Al), bismuth (Bi), tin (Sn), zinc (Zn), or a combination thereof;
and/or

- wherein the first anode active material layer (22) comprises a mixture of first particles comprising amorphous carbon and second particles comprising metal or metalloid,

wherein an amount of the second particles about 1 wt% to about 60 wt% with respect to a total weight of the mixture.

11. The all-solid secondary battery (1) as claimed in claim 10, further comprising a second anode active material layer (24) between the anode current collector (21) and the first anode active material layer (22) and/or between the anode current collector (21) and the electrolyte layer (30),
wherein the second anode active material layer (24) is a metal layer, and the metal layer comprises lithium or a lithium alloy.

12. The all-solid secondary battery (1) as claimed in claim 10 or 11, wherein the electrolyte layer (30) comprises a solid electrolyte, a gel electrolyte, or a combination thereof,

wherein the solid electrolyte comprises a sulfide-based solid electrolyte, an oxide-based solid electrolyte, a polymer solid electrolyte, or a combination thereof, and
the gel electrolyte comprises a polymer gel electrolyte.

13. The all-solid secondary battery (1) as claimed in claims 10 to 12, wherein the sulfide-based solid electrolyte comprises:

at least one selected from among

$Li_2S$-$P_2S_5$,

$Li_2S$-$P_2S_5$-LiX,

wherein X is a halogen element,

$Li_2S-P_2S_5-Li_2O$,

$Li_2S-P_2S_5-Li_2O-LiI$,

$Li_2S-SiS_2$,

$Li_2S-SiS_2-LiI$,

$Li_2S-SiS_2-LiBr$,

$Li_2S-SiS_2-LiCl$,

$Li_2S-SiS_2-B_2S_3-LiI$,

$Li_2S-SiS_2-P_2S_5-LiI$,

$Li_2S-B_2S_3$,

$Li_2S-P_2S_5-Z_mS_n$,

wherein m and n are each a positive number and Z is one of Ge, Zn, and Ga,

$Li_2S-GeS_2$,

$Li_2S-SiS_2-Li_3PO_4$,

$Li_2S-SiS_2-Li_pMO_q$,

wherein p and q are each a positive number and M is one of P, Si, Ge, B, Al, Ga, and In,

$Li_{7-x}PS_{6-x}Cl_x$,

wherein 0<x<2,

$Li_{7-x}PS_{6-x}Br_x$,

wherein 0<x<2, and

$Li_{7-x}PS_{6-x}I_x$,

wherein $0 \leq x \leq 2$; and
an argyrodite-kind solid electrolyte,
wherein the argyrodite-kind solid electrolyte comprises at least one selected from among $Li_6PS_5Cl$, $Li_6PS_5Br$, and LisPSsl, and has a density of about 1.5 gram per cubic centimeter (g/cc) to about 2.0 g/cc.

14. The all-solid secondary battery (1) as claimed in claims 10 to 13, wherein the cathode (10) comprises a cathode current collector (11), and

at least one of the cathode current collector (11) or the anode current collector (21) comprises a base film and a metal layer on at least one surface of the base film,
wherein the base film comprises a polymer, the polymer comprising polyethylene terephthalate (PET), polyethylene (PE), polypropylene (PP), polybutylene terephthalate (PBT), polyimide (PI), or a combination thereof, and
the metal layer comprises indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

15. The all-solid secondary battery (1) as claimed in claims 10 to 14, further comprising an inactive member (40) on one side surface of the cathode (10).

# FIG. 1

FIG. 2A

Bare Li$_2$S

10μm

FIG. 2B

Li$_2$S–LiI–CNF

10μm

# FIG. 3

<u>1</u>

```
                                    ⌐ 11 ⎫
                                    ⌐ 12 ⎬ 10
                                        ⎭

                                    ⌐ 30

                                    ⌐ 22 ⎫
                                    ⌐ 21 ⎬ 20
                                        ⎭
```

# FIG. 4

<u>1</u>

```
                                    ⌐ 11 ⎫
                                    ⌐ 12 ⎬ 10
                                        ⎭

                                    ⌐ 30

                                    ⌐ 22 ⎫
                                    ⌐ 23 ⎬ 20
                                    ⌐ 21 ⎭
```

# FIG. 5

# FIG. 6

FIG. 7

Europäisches
Patentamt

European
Patent Office

Office européen
des brevets

# EUROPEAN SEARCH REPORT

**Application Number**

EP 24 17 2894

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/317337 A1 (HAYASHI AKITOSHI [JP] ET AL) 2 November 2017 (2017-11-02) * the whole document * | 1-15 | INV. H01M4/136 H01M4/58 H01M4/62 |
| A | CN 109 449 383 A (QINGDAO INST BIOENERGY & BIOPROCESS TECH CAS) 8 March 2019 (2019-03-08) * the whole document * | 1-15 | ADD. H01M4/02 |
| A | US 2019/386314 A1 (LANNING BRUCE [US] ET AL) 19 December 2019 (2019-12-19) * the whole document * | 1-15 | |
| A | EP 3 840 090 A1 (INST PHYSICS CAS [CN]) 23 June 2021 (2021-06-23) * the whole document * | 1-15 | |
| A | EP 4 086 983 A2 (SAMSUNG SDI CO LTD [KR]) 9 November 2022 (2022-11-09) * claims 1,8 * | 11,14,15 | |

**TECHNICAL FIELDS SEARCHED (IPC)**

H01M

The present search report has been drawn up for all claims

| Place of search | Date of completion of the search | Examiner |
|---|---|---|
| Munich | 23 September 2024 | Schmidtbauer, H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 2894

This annex lists the patent family members relating to the patent documents cited in the above-mentioned European search report.
The members are as contained in the European Patent Office EDP file on
The European Patent Office is in no way liable for these particulars which are merely given for the purpose of information.

23-09-2024

| Patent document cited in search report | | | Publication date | Patent family member(s) | | | Publication date |
|---|---|---|---|---|---|---|---|
| US 2017317337 | A1 | | 02-11-2017 | CN | 107078295 | A | 18-08-2017 |
| | | | | JP | 6529508 | B2 | 12-06-2019 |
| | | | | JP | WO2016063877 | A1 | 31-08-2017 |
| | | | | KR | 20170068448 | A | 19-06-2017 |
| | | | | US | 2017317337 | A1 | 02-11-2017 |
| | | | | WO | 2016063877 | A1 | 28-04-2016 |
| CN 109449383 | A | | 08-03-2019 | NONE | | | |
| US 2019386314 | A1 | | 19-12-2019 | BR | 112020022105 | A2 | 02-02-2021 |
| | | | | CN | 112219294 | A | 12-01-2021 |
| | | | | EP | 3788666 | A1 | 10-03-2021 |
| | | | | JP | 7480238 | B2 | 09-05-2024 |
| | | | | JP | 2021523547 | A | 02-09-2021 |
| | | | | JP | 2022191280 | A | 27-12-2022 |
| | | | | KR | 20210018245 | A | 17-02-2021 |
| | | | | TW | 201946323 | A | 01-12-2019 |
| | | | | TW | 202315205 | A | 01-04-2023 |
| | | | | US | 2019386314 | A1 | 19-12-2019 |
| | | | | US | 2020343557 | A1 | 29-10-2020 |
| | | | | WO | 2019212905 | A1 | 07-11-2019 |
| EP 3840090 | A1 | | 23-06-2021 | CN | 110838577 | A | 25-02-2020 |
| | | | | EP | 3840090 | A1 | 23-06-2021 |
| | | | | JP | 2021534554 | A | 09-12-2021 |
| | | | | KR | 20210042124 | A | 16-04-2021 |
| | | | | US | 2021175494 | A1 | 10-06-2021 |
| | | | | WO | 2020034875 | A1 | 20-02-2020 |
| EP 4086983 | A2 | | 09-11-2022 | EP | 4086983 | A2 | 09-11-2022 |
| | | | | KR | 20220150753 | A | 11-11-2022 |
| | | | | US | 2022359909 | A1 | 10-11-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230078212